(19) **Europäisches Patentamt**
**European Patent Office**
**Office européen des brevets**

(11) **EP 4 304 997 B1**

(12) **EUROPÄISCHE PATENTSCHRIFT**

(45) Veröffentlichungstag und Bekanntmachung des Hinweises auf die Patenterteilung:
**26.11.2025 Patentblatt 2025/48**

(21) Anmeldenummer: **22710552.5**

(22) Anmeldetag: **02.03.2022**

(51) Internationale Patentklassifikation (IPC):
***C03B 17/06*** *(2006.01)*

(52) Gemeinsame Patentklassifikation (CPC):
**C03B 17/06**

(86) Internationale Anmeldenummer:
**PCT/EP2022/055226**

(87) Internationale Veröffentlichungsnummer:
**WO 2022/189222 (15.09.2022 Gazette 2022/37)**

(54) **VERFAHREN UND VORRICHTUNG ZUM ZIEHEN VON DÜNNGLASBÄNDERN**

METHOD AND DEVICE FOR DRAWING THIN GLASS STRIPS

PROCÉDÉ ET DISPOSITIF POUR ÉTIRER DES BANDES DE VERRE MINCES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.03.2021 DE 102021106106**

(43) Veröffentlichungstag der Anmeldung:
**17.01.2024 Patentblatt 2024/03**

(73) Patentinhaber: **SCHOTT AG**
**55122 Mainz (DE)**

(72) Erfinder:
• **WEGENER, Holger**
**31061 Alfeld (DE)**
• **SCHWERTFEGER, Rainer**
**37632 Eschershausen (DE)**
• **GIEHL, Stefan**
**31061 Alfeld (DE)**
• **SCHMIDT, Karl-Heinz**
**31073 Grünplan (DE)**

(56) Entgegenhaltungen:
**CN-A- 110 590 132    DE-B- 1 040 196**

**Beschreibung**

Die Erfindung betrifft eine Vorrichtung zum Ziehen von Glasbändern aus einer Glasschmelze, wobei die Vorrichtung einen Ziehtank zur Aufnahme einer Glasschmelze aufweist, welcher eine Düse mit einer Durchlassöffnung aufweist, durch welche die Glasschmelze nach unten austreten kann, wobei die Durchlassöffnung schlitzförmig ist und einen Düsenschlitz ausbildet, welcher in mindestens einem Seitenbereich in zumindest einer Richtung gekrümmt ausgebildet ist.

Eine großflächige Herstellung sehr dünner Gläser, beispielsweise mit Dicken kleiner als 250 μm ist nach wie vor eine besondere Herausforderung, besonders dann, wenn hohe Anforderungen an die Oberflächenbeschaffenheit, die maximale Dickenvariation und eine gleichmäßige Breite gestellt werden. Eine Möglichkeit, sehr dünne Gläser herzustellen, ist beispielsweise die Herstellung von Dünnglasbändern durch das sogenannte Down-Draw-Verfahren.

Das Standard Down-Draw-Verfahren benutzt eine Schlitzdüse zur Herstellung von dünnen Flachgläsern. Dabei wird das in einer Schmelzwanne erschmolzene Glas durch ein Rohrsystem geführt und nach Durchlaufen verschiedener Prozessschritte dem Ziehtank zugeführt. Den unteren Abschluss des Ziehtanks bildet eine Düse mit einem Schlitz, durch den das Glas aus dem Ziehtank quillt und mittels Ziehrollen nach unten gezogen wird. Dabei wird mit der Ziehgeschwindigkeit die Enddicke des herzustellenden Dünnglasbandes eingestellt. Je schneller das Glas nach unten gezogen wird, desto dünner wird dieses. Auch durch die Schlitzbreite kann die Glasdicke beeinflusst werden.

Zudem kann am Ziehtank ein Temperaturgradient eingestellt werden, bei dem die Randtemperaturen an den Schlitzenden kälter sein sollten als die Temperaturen in der Mitte des Schlitzes. Dadurch hat das nach unten gezogene Glasband außen immer eine höhere Viskosität als in der Mitte, was zu einer Aufspannung des Glases zwischen den Rändern des Glasbandes, den sogenannten Borten, führt. Auf diese Weise kann die Breite eines Flachglases während der Herstellung kontrolliert und bestimmt werden. Bei einer gleichmäßigen Viskositätsverteilung über die Breite des Glasbandes würde es zu einer Einschnürung, und damit zu einer unkontrollierten Reduzierung der Breite des Glasbandes kommen.

Aufgrund der höheren Viskosität im Randbereich des Glasbandes steigen die Umformkräfte bei einer Erhöhung der Ziehgeschwindigkeit zur Einstellung einer dünneren Glasdicke allerdings mehr an, als in der Bandmitte. Dies führt zu einer kleinen Durchsatzerhöhung im Randbereich des Bandes, wodurch mehr Glas aus dem Schlitz gezogen wird, als ohne Ziehkräfte ausfließen würde. Durch diese ungleichmäßige Durchsatzerhöhung wird sich die Dickenverteilung im Glasband dahingehend verändern, dass die Randbereiche gegenüber der Mitte dicker werden und die Dickenverteilung eine konkave Form bekommt. Durch Bortenroller, welche unterhalb der Düse platziert werden, können derartige Unebenheiten nachträglich ausgeglichen werden. Bei der Herstellung von extrem dünnen Glasbändern unterhalb von ca. 250 μm können solche Bortenroller allerdings einen Bruch des Glasbandes verursachen.

Um diesen Problemen zu begegnen, wurde in US 1626382 A ein trichterförmiger Düsenschlitz vorgestellt, bei welchem die parallele Schlitzform an den Schlitzenden im Verhältnis zu dem mittleren Schlitzbereich schmaler ausgestaltet ist. Die Trichterform ist hingegen an den Schlitzenden weniger stark ausgeprägt, sodass mehr heiße Glasmasse an den Schlitzenden bereitsteht und das Glas an den Schlitzenden weniger schnell abkühlt und die Temperatur im Wesentlichen über die gesamte Schlitzlänge einheitlich gehalten wird. Auf der anderen Seite soll mit dem verschmälerten Schlitz an den Schlitzenden ein erhöhter Zugwiderstand erreicht werden. Eine derartige Schlitzform ist jedoch wenig praktikabel. Zum einen ist ein mechanisch vorgegebenes Verhältnis zweier unterschiedlicher Schlitzbreiten über die Länge desselben Schlitzes sehr speziell gewählt und nur auf eine ganz bestimmte Kombination aus Glaszusammensetzung, vordefinierter Glasdicke und einer dazu passenden Zugkraft anwendbar, und zum anderen können sich die Zugeigenschaften und Dickenverhältnisse des Glases schon bei geringsten Änderungen der Zugkraft ändern. Daher sollte die Düse bei jeder Änderung der gewünschten Glasdicke, oder bei prozessbedingten Schwankungen in der Zugkraft ausgetauscht werden und es können nur extrem geringe Toleranzen zugelassen werden, um ein optimales Ergebnis zu erzielen. Weiterhin kann eine Kombination aus zwei unterschiedlichen Schlitzbreiten auch keinen Gradienten ausgleichen, sodass auch eine durch einen Temperaturgradienten entstehende, ungleichmäßige Dickenverteilung über die Breite des Glasbandes nicht zuverlässig ausgeglichen werden kann.

In der CN 110590132 A ist eine ähnliche Schlitzform beschrieben, wobei der Düsenschlitz im mittleren Bereich parallel ausgebildet ist, und an den Seiten nichtlinear verschmälert wird, sodass eine günstigere Dickenverteilung erreicht werden soll. Es bleibt jedoch das Problem, dass die Düse bei jeder Änderung der Glasdicke gewechselt werden muss und der Temperaturgradient zu einer höheren Viskosität an den Borten führt.

Die US 3473911 beschreibt eine trichterförmige Düse, deren Öffnung in der Breite veränderbar ist. Dies ist jedoch mit hohem Aufwand verbunden, da der Glasformprozess zur manuellen Veränderung dieser Breite unterbrochen werden muss. Auch der bestehende Viskositätsgradient kann auf diese Weise nicht ausgeglichen werden.

Auch in der US 2422466 A wird eine Düse vorgestellt, welche jedoch nur im zentralen Bereich trichterförmig ist. Ähnlich, wie in der US 1626382 A ist der Düsenschlitz an den Seiten enger ausgeprägt, als im zentralen Bereich. Zudem wird ebenfalls ein zusätzliches Volumen an den Seiten bereitgestellt, wodurch das Glas an den Schlitzenden weniger schnell abkühlt. Allerdings ist die Düse an den Seiten nicht trichterförmig, sondern taschenförmig. Dies führt dazu, dass das Glas zwar weniger schnell abkühlt, allerdings auch nicht mehr aus dem Schlitz herausfließen kann, sondern aktiv gezogen werden muss. Bei einheitlicher Zugkraft besteht also das Problem, dass eine bestimmte Menge Glas in den Taschen verbleibt, wodurch eine ungleichmäßige Temperaturverteilung innerhalb der Taschen entsteht. Zudem führt ein Knick im Schlitz dazu, dass die Zugkräfte des gezogenen Glasbandes abschnittsweise ungleich über die Breite des Düsenschlitzes verteilt werden. Eine einheitliche Breite des Glasbandes kann so nur schwer oder sogar gar nicht erreicht werden.

DE1040196 B offenbart eine Vorrichtung zum Ziehen von Glasbändern durch einen Düsenschlitz, der in der Mitte breit und an den Enden schmaler ist, und wobei die Enden in Richtung des Glasziehens nach unten tiefer als die Mitte liegen. Im Verfahren zur Nutzung der Vorrichtung kommen Zugwalzen zum Einsatz.

Es ist daher die Aufgabe der Erfindung, ein Down-Draw-Verfahren sowie eine Vorrichtung zum Ziehen eines sehr dünnen Glasbandes bereitzustellen, mit welchem unterschiedliche Glasdicken ohne große Veränderung der Ziehtanktemperaturen hergestellt werden können und somit auch prozessbedingte Toleranzen ausgeglichen werden können und eine einheitliche Dicke sowie eine gleichmäßige und kontrollierbare Breite des Glasbandes gewährleistet werden. Dadurch soll eine stabilere Prozessführung erreicht werden. Außerdem soll das Einschnüren des Glasbandes, vor allem bei hohen Ziehgeschwindigkeiten, möglichst gut unterdrückt werden.

Diese Aufgabe wird durch den Gegenstand der unabhängigen Ansprüche gelöst. Vorteilhafte Weiterbildungen sind in den jeweiligen abhängigen Ansprüchen angegeben.

Demgemäß betrifft die Erfindung eine Vorrichtung gemäß Anspruch 1 zum Ziehen von Glasbändern aus einer Glasschmelze. Die Vorrichtung weist einen Ziehtank zur Aufnahme einer Glasschmelze auf, welcher eine Düse mit einer Durchlassöffnung aufweist, durch welche die Glasschmelze nach unten austreten kann. Die Durchlassöffnung ist als Düsenschlitz mit zwei Enden ausgebildet ist, wobei die Länge des Düsenschlitzes größer ist, als dessen Breite. Der Düsenschlitz ist in einem ersten und einem zweiten Seitenbereich zu den Enden des Düsenschlitzes hin, insbesondere durchgehend oder kontinuierlich, also in Ziehrichtung nach unten gekrümmt ist, so dass die Enden tiefer liegen, als ein zwischen den Enden angeordneter, insbesondere geradlinig verlaufender mittlerer Bereich des Düsenschlitzes, und wobei sich die Breite des Düsenschlitzes von der Mitte zu den Enden hin ändert.

Der Düsenschlitz erstreckt sich insbesondere über eine Länge, eine Breite und eine Höhe, wobei die Höhe parallel zur Ziehrichtung des Glasbandes verläuft. Die Breite und Länge verlaufen jeweils senkrecht zueinander und zur Höhe. Die Länge des Düsenschlitzes kann daher auch als eine Länge quer zur Breite und Höhe verstanden werden. Dabei ist die Länge des Düsenschlitzes größer, als dessen Breite und Höhe. Wenn im Folgenden von einer Höhe der Düse, oder des Düsenschlitzes gesprochen wird, so ist damit die Erstreckung entlang der Ziehrichtung gemeint, welche vorzugsweise der Gravitation entgegenläuft. Die Höhe der Düse, beziehungsweise der Düsenschlitz verläuft daher von einer oberen Oberfläche einer oberen Wandung der Düse zu einem Unteren Ende. Dementsprechend verlaufen die Breite und Länge der Düse, beziehungsweise des Düsenschlitzes waagerecht, also insbesondere senkrecht zur Ziehrichtung des Glases, wobei die Länge des Düsenschlitzes vorzugsweise durch den Abstand des ersten Endes zum zweiten Ende gegeben ist.

Eine Änderung der Breite des Düsenschlitzes kann so verstanden werden, dass der Düsenschlitz im ersten und/oder zweiten Seitenbereich entlang der Länge und bezüglich seiner Breite durchgehend ungerade oder vorzugsweise gekrümmt ausgebildet ist. Nach unten gekrümmt ist derart zu verstehen, dass der Düsenschlitz im ersten und/oder zweiten Seitenbereich entlang seiner Höhe, vorzugsweise durchgehend ungerade oder insbesondere gekrümmt ausgebildet ist, sodass das erste und/oder zweite Ende tiefer liegen, als der mittlere Bereich.

Es sei angemerkt, dass die Durchlassöffnung eine Austrittsfläche aufweist, durch welche die Glasschmelze austritt. Insbesondere mündet der Düsenschlitz in einer schlitzförmigen Düsenöffnung, die vorzugsweise der Austrittsfläche entspricht. Dabei ist die Austrittsfläche an einem unteren Ende des Düsenschlitzes angeordnet und von einer unteren Oberfläche der Düse umschlossen. Wie auch der Düsenschlitz, erstreckt sich dessen Austrittsfläche in eine Länge, eine Breite und eine Höhe parallel zur Ziehrichtung des Glasbandes, wobei sich die Austrittsfläche vorzugsweise im mittleren Bereich, insbesondere parallel zur Länge und Breite des Düsenschlitzes erstreckt. Im ersten und/oder zweiten Seitenbereich verläuft die Austrittsfläche idealerweise entlang der Länge der Austrittsfläche und bezüglich ihrer Höhe durchgehend ungerade oder insbesondere gekrümmt, und bevorzugt auch durchgehend ungerade oder insbesondere gekrümmt bezüglich ihrer Höhe. Wenn also von einer Form des Düsenschlitzes gesprochen wird, so ist damit auch die Ausgestaltung der Austrittsfläche gemeint, durch die der Düsenschlitz an der Unterseite der Düse definiert ist.

Durch die Änderung der Breite des Düsenschlitzes kann der lokale Durchsatz der Glasschmelze beeinflusst werden. Dadurch lässt sich der Durchsatz entlang der Länge des Düsenschlitzes so anpassen, dass eine Einschnürung des Glasbands reduziert und die Nutzbreite des Bandes zwischen den verdickten Borten möglichst groß wird. Vorteilhafterweise wird das Einschnüren des Glasbandes in der Breite durch den mindestens abschnittweise gekrümmten Düsenschlitz bzw. die zumindest abschnittweise gekrümmte Austrittsfläche stark unterdrückt. Insbesondere die in der Höhe nach unten gekrümmte Form des Düsenschlitzes führt zu einer verbesserten Kräfteverteilung während des Ziehens des Glasbandes, so dass das Glasband durch eine horizontal wirkende Kraft auch in die Breite gezogen wird.

Vorzugsweise verjüngt sich die Durchlassöffnung, insbesondere der Düsenschlitz von der Mitte zu den Enden hin, so dass die Breite des Düsenschlitzes im mittleren Bereich größer ist, als an dessen Enden. Eine Düsenschlitzverjüngung zu den Enden führt vorteilhafterweise zu einem verringerten Durchsatz an Glas durch den Düsenschlitz, bei gleichbleibender Viskosität des Glases über die Länge des Schlitzes. Ein oftmals bestehender Temperaturgradient hat jedoch zur Folge, dass die Viskosität des Glases an den Düsenschlitzenden aufgrund der geringen Temperatur zunimmt, und dadurch eine erhöhte Zugkraft auf das Glas wirkt, welche zu einem erhöhten Durchsatz führt. Dies bedeutet gleichzeitig auch, dass der Durchsatz an den verjüngenden Düsenschlitzenden bei einem Temperaturgradienten, dem Durchsatz im mittleren Bereich angepasst werden kann, sodass eine möglichst einheitliche Dicke des Glasbandes erreicht werden kann.

Vorteilhaft ist auch, wenn sich die Durchlassöffnung, insbesondere der Düsenschlitz von der Mitte aus, vorzugsweise kontinuierlich entlang der Länge in Richtung der Seitenenden verjüngt oder von den Seitenenden entlang der Länge zur Mitte monoton ansteigend ausgebildet ist. Auf diese Weise kann der Durchsatz derart eingestellt werden, dass der Durchsatz des Glases bei einem Temperaturgradienten, und damit auch Viskositätsgradienten, entlang der Länge des Düsenschlitzes gleichmäßig, insbesondere einheitlich ist.

Es ist daher auch denkbar, dass die Durchlassöffnung, insbesondere der Düsenschlitz in Aufsicht, beziehungsweise in Ziehrichtung, also bezüglich der Länge und Breite eine ovale, elliptische, konkave oder linsenförmige Form aufweist. Die Form kann dabei so verstanden werden, dass der Düsenschlitze eine konvexe Form ausbildet, also insbesondere in der Mitte breiter ist, als an seinen Enden. In dieser Form verjüngt sich der Düsenschlitz graduell, beziehungsweise linear oder exponentiell und kann demzufolge in besonderem Maße an einen Temperaturgradienten angepasst werden.

Gemäß der Erfindung weist der Düsenschlitz im ersten und zweiten Seitenbereich bezüglich der Höhe eine kontinuierliche, oder vorzugsweise eine graduelle Krümmung mit einem Radius auf, wobei die Höhe parallel zur Ziehrichtung verläuft. Die in der Höhe nach unten gekrümmte Form des Düsenschlitzes führt zu einer verbesserten Kräfteverteilung während des Ziehens des Glasbandes, sodass das Glasband durch eine horizontal wirkende Kraft auch in die Breite gezogen wird. Bei einer kontinuierlichen Änderung der Höhe des Düsenschlitzes ist die Austrittsfläche zu den Düsenschlitzenden ebenfalls kontinuierlich gekrümmt, sodass der horizontal wirkende Anteil der Kräfte kontinuierlich zu den Schlitzenden ansteigt. Das bedeutet, je stärker der Drang zur Einschnürung des Glasbandes wird, desto stärker wirkt auch die der Einschnürung entgegenwirkende Kraft, sodass eine einheitliche Breite des Glasbandes erreicht wird. Idealerweise ist auch der Übergang vom, vorzugsweise linear und/oder senkrecht zur Höhe verlaufenden mittleren Bereich in die nach unten gekrümmten Seitenbereiche graduell oder linear ausgeführt, sodass insbesondere kein Knick entsteht und ein weicher Übergang, beziehungsweise graduelle Änderung der wirkenden Kräfte gewährleistet ist. Auf diese Weise können Variationen in der Dicke und Breite des Glasbandes vermieden werden. Es ist daher auch denkbar, dass auch der mittlere Bereich, insbesondere leicht in Richtung der Seitenbereiche, beziehungsweise in Richtung der Enden nach unten gekrümmt ist. Vorzugsweise liegt der höchste Punkt in diesem Fall in der Mitte des mittleren Bereichs.

In einer weiteren Ausführungsform weist der Düsenschlitz zumindest eines der folgenden Merkmale auf:

- Der Düsenschlitz ist bis zum Ende stetig gekrümmt, wobei der Düsenschlitz insbesondere von einem mittleren Bereich bis zum Ende stetig gekrümmt ist und vorzugsweise im mittleren Bereich geradlinig verläuft oder nur wenig gekrümmt ist,
- der Düsenschlitz ist bis in das Ende hinein gekrümmt und die Krümmung weist einen Wendepunkt auf.

Es versteht sich, dass der Düsenschlitz auch hinsichtlich seiner Breite und Höhe verjüngt ausgebildet sein kann, vorzugsweise trichter- oder trogförmig. Die Verjüngung in der Breite des Düsenschlitzes kann dabei linear oder nichtlinear, insbesondere gekrümmt verlaufen, um das herausziehen oder Auslaufen des Glases durch den Düsenschlitz zu unterstützen und entsprechend dafür notwendigerweise aufzuwendende Zugkräfte zu verringern.

Es kann vorgesehen sein, dass die Düse im ersten und zweiten Seitenbereich jeweils einen Vorsprung zur Aufnahme eines Zusatzdurchlaufvolumens der Glasschmelze aufweist und sich der Vorsprung entlang der Ziehrichtung erstreckt, also nach unten herausragt, wobei ein Innenraum des Vorsprungs die Größe des Zusatzdurchlaufvolumens definiert. Der Vorsprung ist auch als Vertiefung an den Düsenschlitzenden, insbesondere am ersten und zweiten Düsenschlitzende zu betrachten. Durch diese Vertiefung, beziehungsweise diesen Vorsprung kann der nach unten gekrümmte Verlauf des Düsenschlitzes, sowie vorzugsweise auch ein Innenraum des Vorsprungs bereitgestellt werden. Wobei der Innenraum bevorzugt durch die Wandungen definiert ist, welche den Düsenschlitz umgeben, also Wandungen der Düse, insbesondere Wandungen in den seitlichen Bereichen der Vorsprünge. Der Innenraum ist vorzugsweise dazu ausgebildet, ein Zusatzvolumen zur Aufnahme von Glasschmelze bereitzustellen, wobei die Wandungen des Innenraums, beziehungsweise des Düsenschlitzes, eine höhere Oberfläche bieten und daher die Abkühlung der Glasschmelze beschleunigen können. Die Glasschmelze kann dabei Wärme über die vergrößerte Oberfläche abgeben. Hierdurch hat das Glas eine geringere Temperatur beim Austritt aus dem Düsenschlitz, als ohne diese Vorsprünge/Vertiefungen. Die geringere Temperatur bedingt eine höhere Viskosität, welche ein starkes Einschnüren des Glasbandes unterdrückt. Durch die Wahl eines geeigneten Zusatzvolumens, beziehungsweise Innenraums kann also der Temperaturgradient und damit auch die Viskosität der Glasschmelze gezielt gesteuert werden.

Es ist auch vorgesehen, dass das Verhältnis der Höhe des Innenraums des Vorsprungs zur Breite des Innenraums des Vorsprungs größer ist, als 0,2, bevorzugt größer als 0,5, bevorzugt größer als 0,8 und/oder kleiner als 2, bevorzugt kleiner als 1,6, bevorzugt kleiner als 1,2. Diese Abhängigkeit ist wichtig. Denn je geringer die Breite ist, desto höher wird der Druckverlust, der vom einfließenden Glas überwunden werden muss. Auf der anderen Seite wird die Kühlung dieses Glasvolumens schlechter, wenn der Innenraum zu breit ist, da dann der Weg der Wärmeleitung durch das Glas bis zu den kühlenden Wandungen des Düsenschlitzes, beziehungsweise des Innenraums länger wird. Ein derartiges Verhältnis der Höhe zur Breite des Innenraums ist daher das optimale Verhältnis zwischen Druckverlust und Kühlung der Glasschmelze.

In einer vorteilhaften Ausführungsform ist der Radius, insbesondere der minimale Radius der Krümmung des Düsenschlitzes durch die Höhe des Vorsprungs und eine Länge des Vorsprungs definiert, sodass der Düsenschlitz, insbesondere die Austrittsfläche nach unten gekrümmt ist.

Es ist auch denkbar, dass der Radius der Krümmung des Düsenschlitzes größer ist, als 100 mm, bevorzugt größer als 130 mm, bevorzugt größer als 160 mm und/oder kleiner als 260 mm, bevorzugt kleiner als 230 mm, bevorzugt kleiner als 200 mm. Hierdurch kann eine optimale Kräfteverlagerung mit einer zu den Enden steigenden Horizontalkomponente erreicht werden. Vorzugsweise liegt der mittlere Radius zwischen 100 mm und 260 mm. Gemäß einer Ausführungsform nimmt der Radius mit steigender Länge des Düsenschlitzes, beziehungsweise zu dessen Enden hin, insbesondere linear oder exponentiell ab, um einen kontinuierlichen Anstieg der horizontalen Kraftkomponente gegenüber der vertikalen Kraftkomponente zu gewährleisten. So kann ein zu starkes Einschnüren des Glasbandes bei besonders hohen Ziehgeschwindigkeiten, wie sie beispielsweise für Glasbänder mit einer Dicke unterhalb von 100 $\mu$m eingesetzt werden, verhindert und das Glasband insbesondere an den Enden weit aufgespannt werden.

Vorteilhaft ist auch, wenn das Verhältnis der Länge des Vorsprungs zu der Höhe des Vorsprungs kleiner ist, als 2,8 bevorzugt kleiner als 2,6, bevorzugt kleiner als 2,4. Dies ist das optimale Verhältnis, um eine geeignete Kräfteverteilung zu realisieren. Ist der horizontale Anteil ähnlich groß, wie der vertikale Anteil oder sogar größer, also das Verhältnis von Länge zu Höhe des Vorsprungs unterhalb von 2,4 ist, wenn die Senkrechte zum Düsenschlitz >=45° zur Ziehrichtung ist, wirkt sich dies nachteilig auf die Breite des Glasbandes aus, da ein zu hoher Anteil der Horizontalkomponente zu einer Einschnürung führen kann.

Es ist auch denkbar, dass der gekrümmte Abschnitt des Vorsprungs des ersten Seitenbereichs dem gekrümmten Abschnitt des Vorsprungs des zweiten Seitenbereichs gegenüberliegt. Insbesondere ist der Düsenschlitz mit den Vorsprüngen, beziehungsweise Vertiefungen in zumindest einer Richtung, vorzugsweise jedoch in der Länge und/oder Breite spiegelsymmetrisch ausgebildet. Auf diese Weise kann eine einheitliche Dicke und Breite über die gesamte Breite des Glasbandes erzeugt werden.

Es kann vorgesehen sein, dass die Höhe des Innenraums des Vorsprungs größer ist, als 10 mm, bevorzugt größer als 15 mm, bevorzugt größer als 20 mm und/oder kleiner als 80 mm, bevorzugt kleiner als 60 mm, bevorzugt kleiner als 40 mm.

In einer vorteilhaften Ausführungsform ist die Breite des Vorsprungs gegeben durch das Produkt aus der Breite des Düsenschlitzes, insbesondere des Querschnitts der Durchlassöffnung und einem Wert, der größer ist, als 1 mm, bevorzugt größer als 1,5 mm, bevorzugt größer als 2 mm und/oder kleiner als 15 mm, bevorzugt kleiner als 10 mm, bevorzugt kleiner als 5 mm. Sowohl die Höhe, als auch die Breite des Vorsprungs, beziehungsweise des Innenraums des Vorsprungs definieren das zur Verfügung stehende Zusatzvolumen zur Aufnahme der Glasschmelze, und damit die Möglichkeit die Temperatur und Viskosität des Glases einzustellen. Mit den zuvor angegeben Werten kann daher ein optimaler Temperatur-, beziehungsweise Viskositätsgradient der Glasschmelze über die Breite des Düsenschlitzes erreicht werden, sodass bei einheitlicher Zugkraft auch eine einheitliche Breite und Dicke des Glasbandes sichergestellt wird.

Es kann vorgesehen sein, dass der Vorsprung eine untere Wandung aufweist, welche den Innenraum des Vorsprungs in Ziehrichtung abschließt, wobei die Durchlassöffnung, beziehungsweise Austrittsfläche in der unteren Wandung angeordnet ist. Vorzugsweise umfasst die Düse neben der unteren Wandung auch eine der unteren Wandung gegenüberliegende obere Wandung und insbesondere im ersten und zweiten Seitenbereich seitliche Wandungen auf, durch welche der Innenraum der Vorsprünge begrenzt ist. Idealerweise ist die untere Wandung der Vorsprünge in Ziehrichtung, insbesondere durchgehend oder kontinuierlich gekrümmt ausgebildet, sodass zwischen der unteren und oberen Wandung der Innenraum bereitgestellt werden kann. Durch die Krümmung der unteren Wandung verjüngt sich der Innenraum in Richtung des mittleren Bereichs der Düse.

Die Aufgabe wird auch durch ein Verfahren zum Ziehen von Dünnglasbändern aus einer Glasschmelze gelöst, bei welchem Glas geschmolzen wird und aus einem die Glasschmelze führenden Ziehtank mit einer Durchlassöffnung austritt und in eine Ziehrichtung weg nach unten zum Dünnglasband ausgezogen wird. Das Dünnglasband kann nach dem Austritt aus der Durchlassöffnung durch zumindest eine Kühleinrichtung abgekühlt werden, bis es die Glasübergangstemperatur $T_g$ unterschreitet. Das Dünnglasband wird durch einen Kontakt mit Ziehrollen, welche Zugkräfte auf das Dünnglasband übertragen, in Ziehrichtung ausgezogen. Die Ziehrollen kontaktieren das Glas an einer Position, bei der die Temperatur unterhalb der Glasübergangstemperatur $T_g$ liegt. Dabei wäre auch eine passive Kühlung des Glases denkbar. Für das Verfahren wird eine zuvor beschriebene Vorrichtung verwendet, wobei die Vorrichtung eine Düse mit Vorsprüngen aufweist, welche der Einschnürung des Glasbandes entgegenwirken. Die Düse mit den Vorsprüngen zeichnet sich durch zwei Wirkweisen aus. Zum einen sind die Vorsprünge derart ausgestaltet, dass die Glasschmelze zu den Enden mit geringerer Temperatur austritt, wodurch ein Viskositätsgradient entsteht, welcher zu einer erhöhten Viskosität der Glasschmelze an den Enden der Düse führt und damit auch zu einer erhöhten Zugkraft auf das Glasband. Hierdurch wird das Glasband stärker in die Breite gezogen. Es wird demnach ein Temperaturgradient über die Breite der Düse erzeugt, wobei die Temperatur der Glasschmelze zu den Enden hin abnimmt.

Glas, welches in der Mitte des Düsenschlitzes austritt, legt außerdem eine durch die Höhe der Vorsprünge bestimmte Wegstrecke zurück, bis es auf gleicher Höhe mit den Enden oder Endpunkten des Düsenschlitzes liegt. Damit ist das aus der Mitte kommende Glas bereits etwas abgekühlt, wenn auf gleicher Höhe Glas aus dem Ende des Düsenschlitzes austritt. Das dünne Glas in der Mitte hat damit an diesem Punkt eine höhere Viskosität erlangt, was einer Einschnürung des Glasbandes ebenfalls entgegenwirkt.

Zum anderen ist es auch vorgesehen, dass die Düse so ausgebildet ist, dass eine unterhalb der Durchlassöffnung erzeugte Zugkraft des Glasbandes an den Vorsprüngen in eine vertikale und eine horizontale Kraftkomponente aufgeteilt wird, wobei eine demgegenüber wirkende Umformkraft im Glasband erzeugt wird und der Anteil einer horizontalen Umformkraftkomponente gegenüber dem Anteil einer vertikalen Umformkraftkomponente zum ersten und zweiten Ende ansteigt. Dabei wirkt die horizontale Umformkraftkomponente der Einschnürung des Glasbandes an den Borten entgegen. Diese horizontale Umformkraftkomponente spannt das Glasband in horizontaler Richtung auf, was die Einschnürung reduziert. Durch die spezielle Form, beziehungsweise Ausgestaltung des Düsenschlitzes, insbesondere in den Seitenbereichen wird das Verhältnis der horizontalen und vertikalen Umformkraftkomponente gezielt gesteuert, beispielsweise durch die Krümmung des Düsenschlitzes bezüglich der Höhe des Düsenschlitzes, bevorzugt bezüglich der Höhe der Vorsprünge. Dabei nimmt der Radius dieser Krümmung idealerweise kontinuierlich linear oder exponentiell zu den Enden hin ab, jedoch wird explizit auch ein gradueller Übergang zu einem insbesondere waagerechten und/oder graden, mittleren Bereich der Düse gewährleistet, um Unregelmäßigkeiten in der Dicke und Breite des Glasbandes zu verhindern.

Mithilfe des dargestellten Verfahrens, sowie insbesondere auch der Vorrichtung können besonders dünne Glasbänder hergestellt werden. Durch die Verwendung der speziell geformten Düse mit dem Düsenschlitz und den Vorsprüngen, durch welche die auf das Glasband über dessen Breite wirkenden Zugkräfte gezielt, und insbesondere bereichsindividuell eingestellt werden können, kann auf Bortenroller, die zum Glasbandriss führen können, verzichtet werden.

Die Vorrichtung und das Verfahren sind besonders für die Herstellung von dünnen und ultradünnen Gläsern geeignet. So wird gemäß einer Ausführungsform ein Dünnglasband mit einer Dicke von höchstens 200 $\mu$m, vorzugsweise höchstens 100 $\mu$m gezogen. Es können auch noch deutlich dünnere Glasbänder, etwa mit einer Dicke von höchstens 70 $\mu$m, vorzugsweise höchstens 50 $\mu$m, besonders bevorzugt höchstens 20 $\mu$m gezogen werden. Es sind auch Dicken von wenigstens 5 $\mu$m, bevorzugt wenigstens 10 $\mu$m denkbar. Derartige Glasbandstärken sind insbesondere mit Blick auf mehrschichtige, flexible oder biegsame Abdeckungen, wie beispielsweise flexible Displays von Vorteil. Die besondere Ausgestaltung der Ziehdüse gestattet es insbesondere, ohne Änderung des Düsenspalts Glasbänder mit stark unterschiedlichen Dicken herzustellen. Dabei können nacheinander Glasbänder aus der gleichen Düse ausgezogen, deren Dicke sich um mindestens einen Faktor 1,5, vorzugsweise mindestens um einen Faktor 2 unterscheidet. Auf diese Weise können Glasbänder mit unterschiedlichen Dicken, beziehungsweise Stärken hergestellt werden, ohne die Düse zu wechseln und damit auch ohne den Herstellungsprozess zu unterbrechen.

Die Erfindung wird nachfolgend genauer anhand der beigeschlossenen Figuren erläutert. In den Figuren bezeichnen gleiche Bezugzeichen jeweils gleiche oder entsprechende Elemente. Es zeigen:

Fig. 1    Schematische Darstellung einer Vorrichtung zum Ziehen von Glasbändern aus einer Glasschmelze.

Fig. 2    Schematische Darstellung eines Düsenschlitzes in der Aufsicht und Dickenverteilung entlang der Breite eines Dünnglasbandes.

Fig. 3    Schematische Darstellung eines Düsenschlitzes in der Aufsicht und Dickenverteilung entlang der Breite eines Dünnglasbandes.

Fig. 4    Schematischer Querschnitt eines Seitenbereichs der Düse mit Vorsprung.

Fig. 5    Schematischer Aufsicht einer Düse

Fig. 6    Schematische Darstellung eines Seitenbereichs der Düse mit Vorsprung und kurzem Düsenschlitz in perspektivischer Ansicht.

Fig. 7      Schematische Darstellung eines Seitenbereichs der Düse mit Vorsprung und kurzem Düsenschlitz in perspektivischer Ansicht.

Fig. 8      Schematischer Querschnitt eines seitlichen Bereichs der Düse mit Vorsprung.

Fig. 9      Schematischer Querschnitt einer Düse

Fig. 10     Schematische Darstellung einer Vorrichtung zum Ziehen von Glasbändern aus einer Glasschmelze.

Fig. 11     Schematischer Ansicht eines Kühlofens.

Fig. 12     Schematischer Ansicht des Formgebungsbereichs mit Heiz-, bzw. Kühleinheiten.

Fig. 13     Schematische Darstellung des Tiegels, des Auslaufrohres und des Ziehtanks.

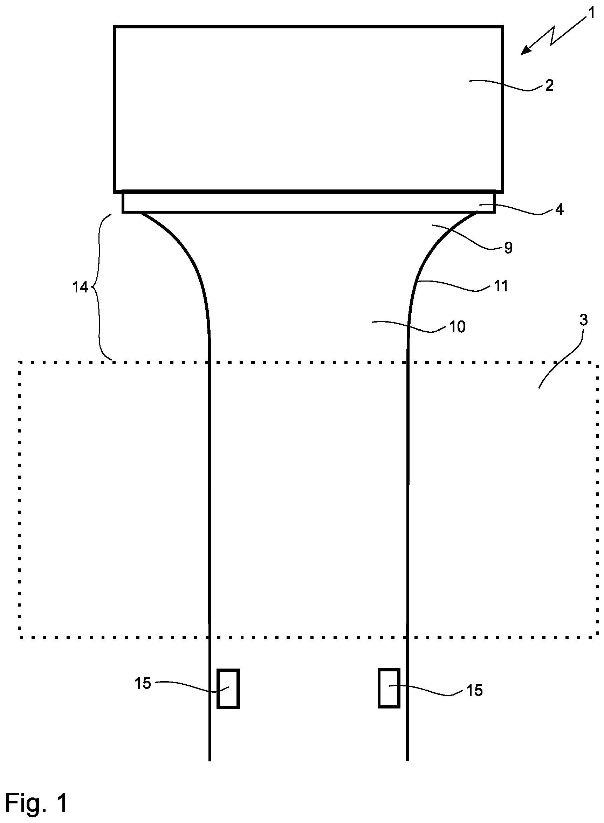

Fig. 1 zeigt eine schematische Darstellung einer Vorrichtung 1 zum Ziehen von Glasbändern 10 aus einer Glasschmelze 9. Die Vorrichtung umfasst einen Ziehtank 2 mit einer darunter angeordneten Düse 4 und einer Kühleinrichtung 3, in der das Glasband 10 gekühlt wird. Die Glasschmelze 9 wird zunächst in den Ziehtank 2 geleitet, in welchem eine Temperaturführung stattfindet, beziehungsweise die Temperatur der Glasschmelze 9 über die Länge und Breite des Ziehtanks eingestellt wird. Anschließend gelangt die Glasschmelze 9 in die Düse 4, durch deren Öffnung die Glasschmelze 9 aus dem Ziehtank 2 austritt. Schon während des Durchlaufs durch die Düse, insbesondere aber dem Zeitpunkt des Austritts aus der Düse wird die Glasschmelze 9 im Formgebungsbereich 14 in ihre abschließende Form, dem Glasband 10 gebracht. Das Glasband 10 wird an den Rändern durch die Glasbandränder, beziehungsweise Borten 11 begrenzt.

Nach dem Austritt aus der Düse 4 wird das Glasband 10 im oder unterhalb des Formgebungsbereichs 14 abgekühlt, bis es die Glasübergangstemperatur $T_g$ unterschreitet. Vorzugsweise sind unterhalb der Kühleinrichtung 3, also vorzugsweise im Kaltbereich Ziehrollen 15 angeordnet, durch die Zugkräfte auf das Glasband 10 übertragen werden. Vorzugsweise beträgt die Temperatur des Glases an der Kontaktstelle mit den Ziehrollen höchstens 200 °C, besonders bevorzugt höchstens 100 °C. Das Kontaktieren des Glases mit Ziehrollen erst im Kaltbereich, also unterhalb von Tg, besonders bevorzugt bei Temperaturen von höchstens 200 °C hat sich als günstig erwiesen, um die Bruchwahrscheinlichkeit zu reduzieren. Auch bestehen bei niedrigen Temperaturen größere Freiheiten in der Auswahl des Materials der Ziehrollen. So können die Ziehrollen eine Elastomeroberfläche aufweisen, die nur geringen Schlupf zeigt.

Vorzugsweise sind zumindest zwei Paare von Ziehrollen 15 quer zur Ziehrichtung Z beabstandet angeordnet, wobei die Paare von Ziehrollen das Glasband 10 beidseitig im Bereich der Borten 11 jeweils zwischen zwei Ziehrollen 15 fassen. Je nach gewünschter Stärke des Glasbandes 10 wird die durch die Ziehrollen 15 übertragene Zugkraft angepasst, beziehungsweise eingestellt. Bei einer geringeren Stärke kann dazu gemäß einer Ausführungsform die Zugkraft also höher eingestellt werden, als bei einer gewünschten höheren Stärke, also einem dickeren Glasband 10. Das Glasband 10 wird demnach vorzugsweise durch die durch die Ziehrollen 15 übertragene Zugkraft auf eine gewünschte Stärke eingestellt und als Glasschmelze 9 aus der Düse 4 herausgezogen.

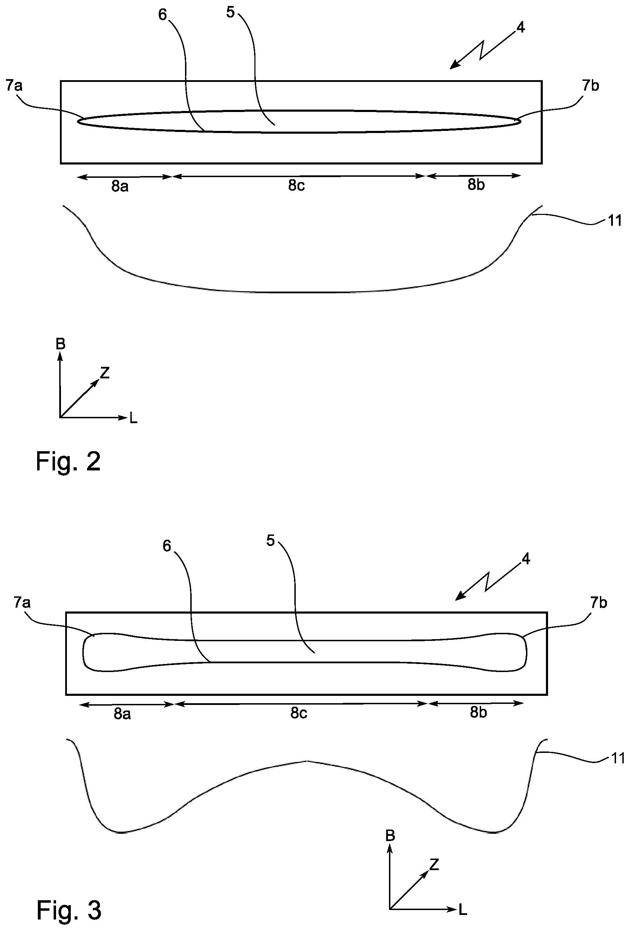

In den Figuren 2 und 3 ist jeweils ein Düsenschlitzprofil in der Aufsicht dargestellt, sowie eine typische Dickenverteilung entlang der Breite eines Dünnglasbandes. Die Düse 4 erstreckt sich entlang einer Breite B einer Länge L und einer Höhe H entlang einer Ziehrichtung Z und weist eine vorzugsweise schlitzförmige Durchlassöffnung auf, welche insbesondere als Düsenschlitz 5 ausgebildet ist. Der Düsenschlitz ist von Wandungen 6 der Düse 4 umgeben. Dabei weist der Düsenschlitz 5 ein erstes Ende 7a und zweites Ende 7b auf, wobei das erste Ende 7a in einem ersten Seitenbereich 8a des Düsenschlitzes 5 und das zweite Ende 7b in einem zweiten Seitenbereich 8b angeordnet ist und sich beide Seitenbereiche 8a, 8b im Wesentlichen entlang der Länge L erstrecken. Dabei ist zwischen dem ersten Seitenbereich 8a und dem zweiten Seitenbereich 8b ein mittlerer Bereich 8c angeordnet.

Im unteren Bereich der Figuren 2 und 3 ist jeweils die Dickenverteilung entlang der Breite eines Dünnglasbandes 10 bei einem parallel ausgebildeten Düsenschlitz 5 dargestellt, wobei in Fig. 2 eine typische Dickenverteilung eines Dünnglasbandes 10 mit einer Stärke, beziehungsweis Dicke unterhalb von 300 $\mu$m, und in Fig. 3 eines mit einer Stärke oberhalb von 300 $\mu$m gezeigt ist. Es zeigt sich, dass ein Glasband 10 mit einer Stärke unterhalb von 300 $\mu$m (Fig. 2) an den Borten 11 dicker ausgeprägt ist, als in der Mitte zwischen den Borten. Bei einem Glasband 10 mit einer Stärke oberhalb von 300 $\mu$m (Fig. 3) wird hingegen ein gegenteiliger Effekt beobachtet. Das Maximum in der Dickenverteilung liegt hier in der Mitte. Dies liegt vor allem an dem unterschiedlichen Abkühlverhalten, beziehungsweise einem sich über die Breite bildenden Temperaturgradienten der unterschiedlich dicken Glasbänder 10 in Verbindung mit der Ziehgeschwindigkeit. Um die Ziehgeschwindigkeit, beziehungsweise den Durchsatz an Glas durch den Düsenschlitz 5 bei einem bestehenden oder in der Düse 4 gezielt herbeigeführten Temperaturgradienten der Glasschmelze zu vereinheitlichen, ist der Düsenschlitz 5 gekrümmt ausgebildet. Vorzugsweise kann der Temperaturgradient aber auch gezielt so eingestellt werden, dass der Temperaturgradient von der Mitte nach außen verläuft, also insbesondere von der Mitte zu den Enden 7a, 7b des Düsenschlitzes zu oder abnimmt. Insbesondere ist der erste 8a und/oder zweite 8b Seitenbereich entlang der Länge L des Düsenschlitzes 5 und bezüglich seiner Höhe H durchgehend ungerade oder vorzugsweise gekrümmt ausgebildet. Idealerweise weist der Düsenschlitz 5 daher, insbesondere für ein Glasband 10 mit einer Stärke unterhalb von 300 μm einen ovalen, ellipsoidalen, oder linsenförmigen, beziehungsweise allgemeiner konvexen Querschnitt senkrecht zur Höhe auf, um den Durchsatz an den Rändern 11 zu verringern. dies ist insbesondere so zu verstehen, dass die Breite Bs des Düsenschlitzes 5 von der Mitte zu den Enden 7a, 7b abnimmt. Bei einem Glasband 10 mit einer Stärke oberhalb von 300 μm wird hingegen ein knochenförmiger Querschnitt bevorzugt, um den Durchsatz in der Mitte des Glasbandes 10 relativ zu den Borten 11 zu verringern, wobei ein knochenförmiger Querschnitt vorzugsweise als ein konkav ausgebildeter Querschnitt zu verstehen ist, insbesondere so, dass die Breite Bs des Düsenschlitzes 5 von der Mitte zu den Enden 7a, 7b zunimmt. In beiden Fällen kann also mit der Regulierung des Durchsatzes anhand des Düsenschlitzprofils eine einheitliche Glasbandstärke über die Breite des Glasbandendes 10, beziehungsweise über die Länge L des Düsenschlitzes 5 erreicht werden. Bevorzugt verläuft die Krümmung durchgehend oder sogar kontinuierlich und insbesondere linear oder exponentiell um eine gleichmäßige Formgebung entlang der Länge L zu ermöglichen.

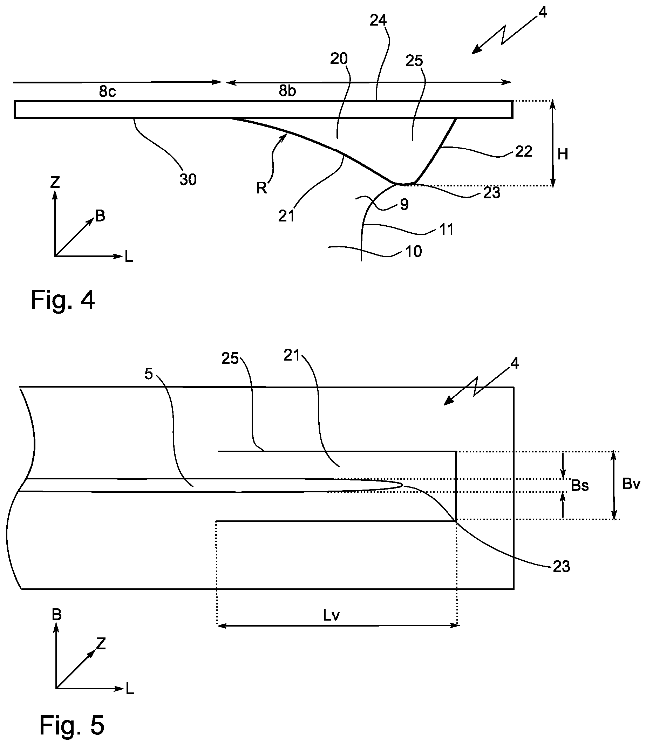

Die Figuren 4 und 5 zeigen jeweils einen schematischen Querschnitt eines Seitenbereichs 8b. Fig. 4 zeigt dabei den Seitenbereich 8b der Düse 4 mit Vorsprung 20, wobei der Vorsprung 20 als Vertiefung des Düsenschlitzes 5 zu verstehen ist, beziehungsweise als Vertiefung, welche ein zusätzliches Volumen zur Aufnahme der Glasschmelze 9 bereitstellt. Der Vorsprung wird bevorzugt durch eine untere Wandung 21, eine Endwandung 22, sowie bevorzugt auch durch mindestens eine, bevorzugt zwei oder mehr seitliche Wandungen 25 definiert. Die seitlichen Wandungen können bezüglich der Höhe H der Düse 4, der Breite Bv des Vorsprungs 20 sowie gegebenenfalls auch bezüglich der Länge des Vorsprungs 20 linear oder gebogen geformt sein. Die untere Wandung 21 erstreckt sich vorzugsweise zwischen den seitlichen Wandungen 25 in die Breite Bv und wird insbesondere von der Endwandung 22 in der Länge begrenzt.

Um einen Effekt auf die beim Ziehen des Glasbandes 10 wirkenden Kräfte zu erzielen, ist jedoch die untere Wandung 21 gekrümmt, insbesondere, kontinuierlich, vorzugsweise auch linear oder exponentiell entlang der Länge L und bezüglich der Höhe H gekrümmt geformt. Auf diese Weise kann ein gleichbleibend gebogenes Profil realisiert werden, wobei die untere Wandung 21 des Vorsprungs 20 idealerweise einen weichen Übergang zu einer unteren Begrenzung 30 des mittleren Bereichs 8c des Düsenschlitzes 5 ausbildet. Bestenfalls bilden die untere Wandung 21 und die untere Begrenzung 30 des mittleren Bereichs 8c eine einheitliche Fläche aus, sodass vorzugsweise die Krümmung der unteren Wandung 21 im Seitenbereich 8b beginnt und sich bis zu einem unteren Ende 23 des Vorsprungs erstreckt. Am unteren Ende 23 grenzt die untere Wandung 21 an die Endwandung 22 an, und kann mit dieser ein- oder zweistückig verbunden sein.

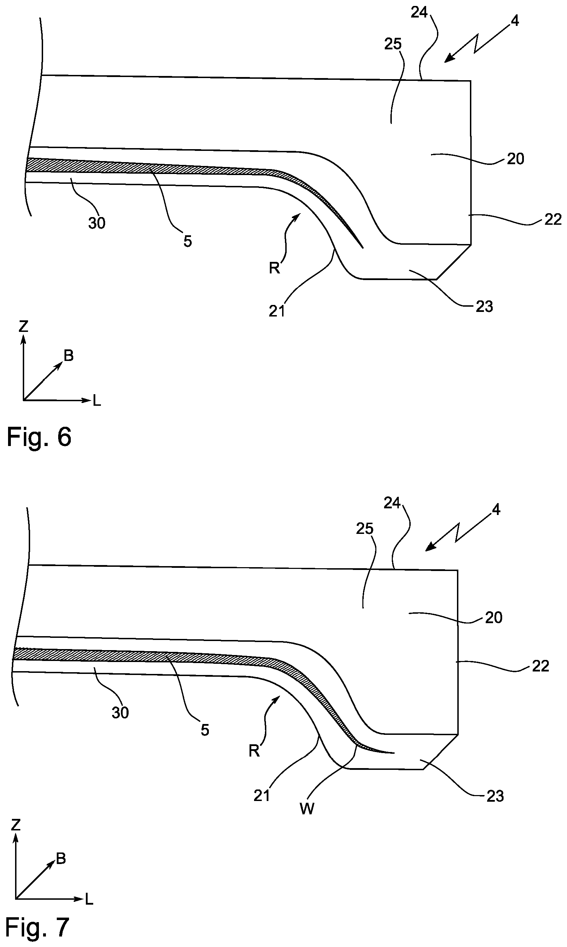

Vorzugsweise schließen die untere Wandung 21 und/oder die untere Begrenzung 30 die Düse 4, beziehungsweise den Ziehtank 2 nach unten hin ab, wobei insbesondere die untere Begrenzung 30 horizontal verläuft. Der Düsenschlitz ist dabei in der unteren Begrenzung 30 und der unteren Wandung 21 angeordnet, insbesondere derart, dass die Glasschmelze 9 aus dem unteren Ende 23 herausfließen kann, oder zumindest herausgezogen werden kann, sodass das Glasband 10 an den Borten 11 am unteren Ende 23 in die Breite gezogen werden kann. Der Düsenschlitz 5 kann sich in seiner Länge L also auch über das untere Ende hinaus erstrecken, wie in Fig. 7 dargestellt ist.

Die Höhe H der Düse 4 von dem unteren Ende 23 bis zu einer oberen Wandung 24 der Düse 4, sowie die Länge Lv des Vorsprungs 20 im Seitenbereich 8a, 8b bestimmen den Radius R. Um den Radius R der Krümmung des Düsenschlitzes 5, beziehungsweise der unteren Wandung 21 auf, idealerweise zum unteren Ende 23 hin abnehmende Werte von vorzugsweise zwischen 160 mm und 200 mm einzustellen, ist der Vorsprung 20 zwischen 20 mm und 40 mm hoch. Eine weitere wichtige Abhängigkeit ist das Verhältnis von Höhe H der Düse 4 und Breite Bv des Vorsprungs 20, welcher in Fig. 5 auch in schematischer Aufsicht dargestellt ist. Je geringer die Breite Bv, desto höher ist der Druckverlust, der vom einfließenden Glas überwunden werden muss. Auf der anderen Seite wird die Kühlung dieses Glasvolumens schlechter, wenn der Vorsprung 20 zu breit ist, da dann der Weg der Wärmeleitung durch das Glas bis zu den kühlenden Wänden 21, 22 des Vorsprungs länger wird. Das Verhältnis von Höhe H der Düse 4 zu Breite Bv im Innenraum des Vorsprungs 20 liegt daher idealerweise zwischen 0,8 und 1,2. Da der Düsenschlitz 5 im Wesentlichen oval oder ellipsoidal geformt ist, kann der Düsenschlitz 5 durch eine Variation der Breite Bs definiert sein. So ist beispielsweise ein Unterschied von der Mitte zu den Außenseiten von über 3 mm in der Düsenschlitzbreite Bs zur Herstellung von 50 μm dickem Glas denkbar. Dabei kann sich die Breite des Düsenschlitzes sowohl im Seitenbereich 8a, 8b, also im Bereich des Vorsprungs 20 ändern, als auch im mittleren Bereich 8c der Düse 4.

Um einen optimalen Innenraum des Vorsprungs 20 zu definieren oder bereitzustellen und die Viskosität der Glasschmelze 9 dadurch einzustellen, wird die Breite Bv des Vorsprungs 20 anhand der Düsenschlitzbreite Bs berechnet.

$$Bv = 2 \times Bs \text{ bis } 5 \times Bs$$

Entlang der Länge erstreckt sich der Vorsprung 20 bevorzugt über das untere Ende 23 hinaus, sodass die Endwandung 22 schräg und/oder gekrümmt von der oberen Wandung 24 verlaufen kann. Vorzugsweise ist die obere Öffnung in der oberen Wandung 24 der Düse 4 breiter und/oder länger als untere Wandung 21, insbesondere aber breiter und/oder länger, als die Breite Bs des Düsenschlitzes.

Die Figuren 6 und 7 stellen zwei Ausführungsformen des Düsenschlitzes 5 der Düse 4 in perspektivischer Ansicht dar. In einer Ausführungsform (Fig. 6) ist der Düsenschlitz 5 im Vergleich zur Ausführungsform der Fig. 7 etwas kürzer ausgeprägt, sodass der Düsenschlitz 5 noch im nach unten gekrümmten Bereich des Vorsprungs 20 endet. In dieser Ausführungsform ist der Düsenschlitz 5 bis zu seinem Ende daher stetig nach unten gekrümmt. In einer in Fig. 7 gezeigten Ausführungsform, ist der Düsenschlitz etwas länger ausgeprägt. Daher erstreckt sich der Düsenschlitz 5 über die untere Wandung 21 des Vorsprungs 20 bis in das untere Ende 23 hinein, oder sogar darüber hinaus. Vorzugsweise weist die Krümmung des Düsenschlitzes 5 im Übergangsbereich der unteren Wandung 21 zum unteren Ende 23 einen Wendepunkt W auf, sodass insbesondere die Steigung wieder abnimmt, oder sogar rückläufig ist. Der Düsenschlitz 5 kann am Wendepunkt auch einen Knick aufweisen.

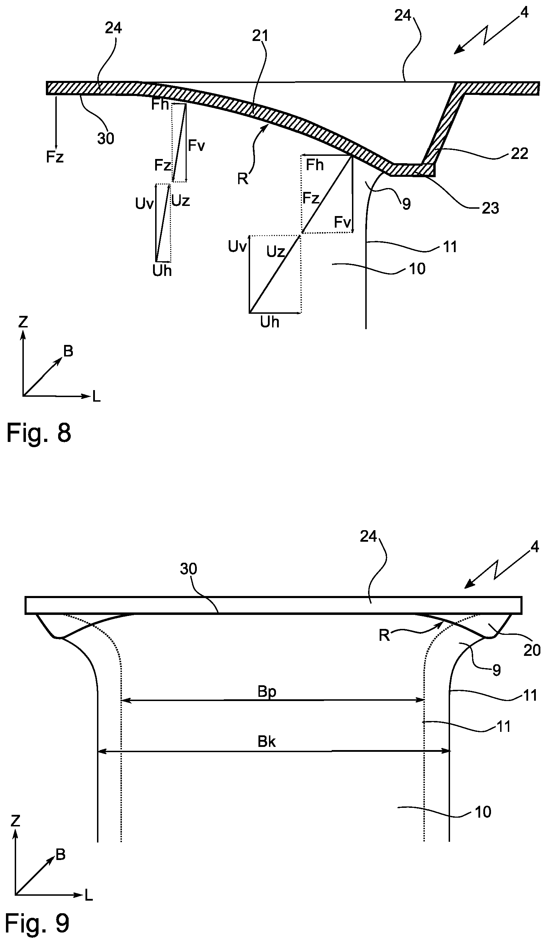

Figur 8 zeigt beispielhaft die Kräfteverteilung am Vorsprung 20. Die durch den Zug des Glasbandes 10 in Ziehrichtung erzeugte Kraft wird am Vorsprung 20, beziehungsweise den Vorsprüngen 20 durch die Krümmung des Düsenschlitzes 5 in eine vertikale Fv und eine horizontale Fh Kraftkomponente aufgeteilt. Dies führt im nach unten gekrümmten Abschnitt 8b des Düsenschlitzes 5 oder unteren Wandung 21 zu einer kontinuierlich in Richtung zum Düsenende anwachsenden Querkomponente der Zugkraft. Das bedeutet, je kleiner der Radius R in Richtung des unteren Endes 23 wird, desto größer wird auch der horizontale Anteil der Umformkraft Uh beim Ziehen des Glasbandes 10, welcher sehr wichtig ist, um das Glasband 10 aufzuspannen und breit zu halten. Die Reaktionskräfte im zähen Glas sorgen für die Umformung, also das dünner ziehen der Glasmasse. Hier wiederum zieht also die horizontale Komponente Uh das in der Umformung befindliche Glas, insbesondere an den Borten 11 nach außen, also in die Breite und somit auch der Einschnürung entgegen, während der vertikale Anteil der Umformkraft Uv das Glas in Ziehrichtung Z nach unten zieht. Die aus der Summe der horizontalen und vertikalen Kraftkomponenten resultierenden Kräfte sind als Fz für die Zugkraft und Uz für die Umformkraft im Glasband 10 angegeben.

Abhängig von der gewünschten Breite des Glasbandes 10 und/oder der Zugkraft kann der Radius R der Krümmung des Düsenschlitzes 5 auch einheitlich sein, sich also vorzugsweise nicht in Richtung des unteren Endes verkleinern. Besonders wichtig ist jedoch, dass am Übergang der unteren Wandung 21 zur unteren Begrenzung 30 des mittleren Bereichs 8c kein "Knick" entsteht, da ein "Knick" zu einer quasi punktuellen Ungleichmäßigen, beziehungsweise ungleichen Kräfteverteilung führt. Insbesondere eine ungleichmäßige Kräfteverteilung der Umformkräfte Uh und Uv kann zu lokalen Änderungen der Dicke oder Breite des zähen Glases führen, sodass ein stabiler Umformprozess, beziehungsweise über die Breite des Glasbandes 10 einheitliche Parameter oder Glaseigenschaften nicht mehr gewährleistet werden können.

Insgesamt lassen sich mit der Düse 4 mit dem in der Länge L, der Breite B und der Höhe H gekrümmten Düsenschlitz 5 aus einer vorgegebenen Ziehtankbreite breitere Glasbänder produzieren, als es ohne die Krümmungen möglich wäre. Es ist sogar möglich, Glasdicken unterhalb von 100 $\mu$m und auch unterhalb von 50 $\mu$m zu ziehen. In Figur 9 ist beispielhaft eine durch den gekrümmten Schlitz erzeugte Änderung der Breite des Glasbandes 10 im Vergleich zu einem in allen Richtungen parallel verlaufenden Düsenschlitz 5 dargestellt. Dabei zeigt die gestrichelte Bortenlinie 11 die Breite Bp eines mit einem parallelen Düsenschlitz 5 erzeugten Glasbandes 10 und die durchgezogene Bortenlinie 11 die Breite Bk eines Glasbandes 10, welches mithilfe des gekrümmten Düsenschlitzes 5 herstellbar ist. Rein beispielhaft sind im Folgenden einige typische Beträge der mit einem 700 mm langen Düsenschlitz 5 erzeugten Brottobreiten eines Glasbandes 10 mit unterschiedlichen Dicken, sowie die mögliche Änderung der Breite bei Verwendung eines gekrümmten Düsenschlitzes 5 angegeben.

Tabelle 1: Änderung der Breite des Glasbandes bei Verwendung eines Düsenschlitzes mit Vorsprüngen.

| Glasdicke ($\mu$m) | Breite ohne Vorsprung (mm) | Breite mit Vorsprung (mm) |
|---|---|---|
| 1000 | 560 | 640 |
| 500 | 490 | 620 |
| 100 | 400 | 590 |

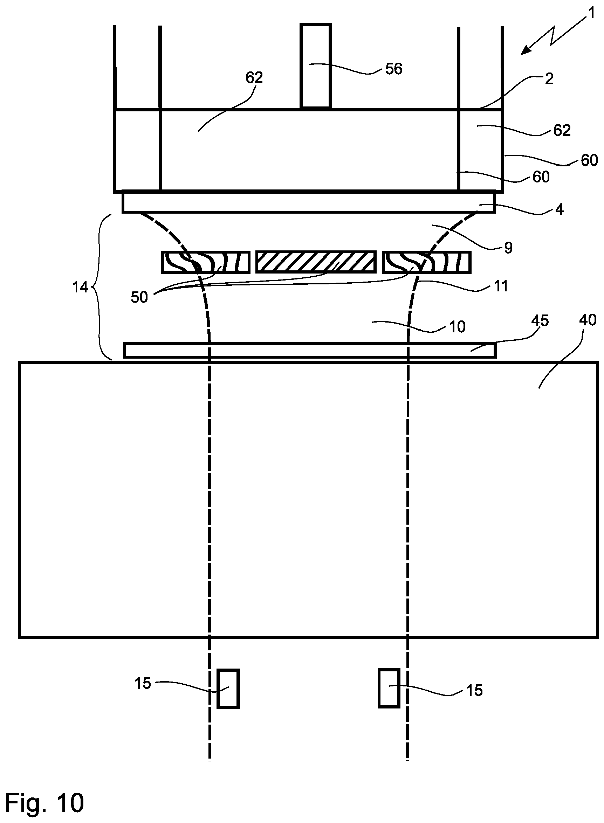

Im Vergleich zur in Fig. 1 dargestellten Ausführungsform der Vorrichtung 1 zeigt Fig. 10 eine schematische Darstellung einer Vorrichtung 1 mit weiteren Ausführungsformen bezüglich der Kühleinrichtung 3 und/oder des Ziehtanks 2. Gemäß einer dieser Ausführungsformen weist die Kühleinrichtung 3 zumindest einen Kühlofen 40 auf, durch den das Glasband 10, insbesondere durch eine Einlass- und eine Auslassöffnung des Kühlofens 40 bewegt wird. Der Kühlofen 40 ist vorzugsweise unterhalb des Formgebungsbereichs 14 des Glasbandes 10 angeordnet, insbesondere um das geformte Glasband 10 nach der Formgebung auf eine gewünschte Temperatur, beispielsweise Raumtemperatur zu kühlen, insbesondere auch kontrolliert und langsam abzukühlen, um beispielsweise Spannungen im Glasband 10 zu vermeiden oder abzubauen.

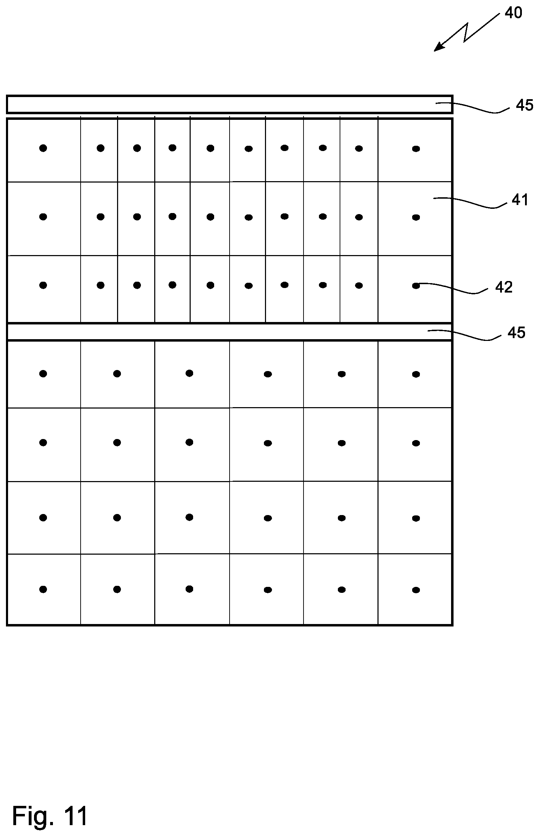

Zur besonders präzisen Abkühlung über die Breite des Glasbandes 10 kann vorgesehen sein, dass der Kühlofen 40 mehrere Kühl- und/oder Heizabschnitte 41 aufweist, welche nebeneinander/untereinander und vorzugsweise angrenzend aneinander angeordnet sind. Zumindest ein Kühl- und/oder Heizabschnitt 41, bevorzugt mehrere, mehr bevorzugt alle Kühl- und/oder Heizabschnitte 41 umfassen ein Thermoelement 42 zur Messung und Regelung der Temperatur. Bevorzugt sind die Kühl- und/oder Heizabschnitte 41 kachelförmig und insbesondere nach Art einer Kachelung nebeneinander angeordnet. Dies ist so zu verstehen, dass die Kühl- und/oder Heizabschnitte als Kacheln ausgebildet sind, bzw. rechteckig, quadratisch oder sechseckig geformt sind, insbesondere sodass die Kühl- und/oder Heizabschnitte 41 ohne zwischenliegendem Freiraum angrenzend aneinander angeordnet werden können. Eine solche Ausführungsform ist beispielsweise in Fig. 11 dargestellt. Es kann vorgesehen sein, dass die Kühl- und/oder Heizabschnitte 41 unterschiedliche Größen aufweisen. So können beispielsweise Kühl- und/oder Heizabschnitte 41, welche insbesondere im Bereich der Borten 11 oder den Kühlofenrändern angeordnet sind, größer oder kleiner ausgebildet sein, als solche, die mittig des Kühlofens 40 oder des Glasbandes 10 angeordnet sind. Auf diese Weise können bestimmte Bereiche des Glasbandes 10 lokal stärker oder schwächer gekühlt und/oder beheizt werden, um für jede Glasbandbreite und Glasbandform eine individuelle Kühl- und/oder Beheizmöglichkeit bereitstellen zu können. Es ist daher auch denkbar, dass Kühl- und/oder Heizabschnitte 41 in einem unteren Bereich des Kühlofens 40 größer oder kleiner ausgebildet sind, als im oberen Bereich des Kühlofens 40.

Zur Kontrolle der Temperatur des Glasbandes 10 ist vorgesehen, dass die Vorrichtung 1 zumindest eine Temperaturmesseinrichtung 45 aufweist. Die Temperaturmesseinrichtung 45 ist insbesondere derart ausgebildet, dass die Temperatur des Glasbandes 10 über die vorzugsweise gesamte Breite des Glasbandes erfassbar, bzw. messbar ist. Wie in Fig. 10 gezeigt, kann die Temperaturmesseinrichtung 45 im Formgebungsbereich 14, insbesondere oberhalb des Kühlofens 40 angeordnet sein, sodass beispielsweise die Temperatur des Glasbandes 10 erfassbar ist, bevor es mittels des Kühlofens 40 gekühlt wird. Auf diese Weise kann ein für das Glasband 10 optimales Kühlprogramm realisiert werden. Ebenso kann die Temperaturmesseinrichtung 45 oder zumindest eine oder mehrere weitere Temperaturmesseinrichtungen 45 auch Teil des Kühlofens 40 sein und/oder innerhalb des Kühlofens, beispielsweise mittig angeordnet sein.

In einigen Fällen, beispielsweise, wenn eine Düse 4, die für eine bestimmte Glasdicke optimiert ist, für die Fertigung einer abweichenden Glasdicke eingesetzt wird, kann es erforderlich sein, die Temperatur des Glasbandes 10 bereits im Formgebungsbereich 14 zu beeinflussen. In einer weiteren Ausführungsform weist die Vorrichtung 1 daher zumindest eine, insbesondere mehrere räumlich verteilt angeordnete Kühl und/oder Heizeinheiten 50 auf, welche vorzugsweise im Formgebungsbereich 14 angeordnet sind. Dabei können die Kühl und/oder Heizeinheiten 50 derart ausgestaltet sein, dass die Kühl und/oder Heizeinheiten 50 das Glasband 10 jeweils gezielt zumindest bereichsweise lokal heizen und/oder kühlen können, sodass die Breite des Glasbandes 10 im Formgebungsbereich 14 gezielt einstellbar ist. Damit wird verstanden, dass die Kühlung oder Beheizung nicht über die gesamte Breite des Glasbandes 10 erfolgt, sondern die Temperatur des Glasbandes 10 lokal in gewünschten Bereichen veränderbar ist. Somit kann eine über die Glasbandbreite inhomogene und/oder homogene Kühlung oder Beheizung realisiert werden.

Besonders bevorzugt ist es daher, wenn räumlich verteilt, insbesondere quer zum Glasband 10 verteilt verschiedene Heiz- und/oder Kühleinheiten 50 angeordnet sind, um Einfluss auf die lokale Glasverteilung im Glasband 10 zu nehmen und auch kleinere Anpassungen der Glasverteilung vornehmen zu können. Hierbei werden die Heiz- und/oder Kühleinheiten 50 beispielsweise über die gesamte Fläche des Formgebungsbereichs 14 verteilt angeordnet, vorzugsweise auf einer Höhe größer 5%, bevorzugt größer 10%, bevorzugt größer 15% und/oder auf einer Höhe kleiner 50%, bevorzugt kleiner 30% der Länge des Formgebungsbereichs 14 angeordnet, wobei die Länge des Formgebungsbereichs 14, insbesondere quer zur Breite des Glasbandes 10 steht. Dabei kann der Formgebungsbereich 14 in seiner Länge zwischen 100 mm und 300 mm betragen. Mit anderen Worten, die Heiz- und/oder Kühleinheiten 50 können zwischen der Düse 4 und dem Kühlofen 40 angeordnet sein, so dass beispielsweise eine Feinjustierung der Dicke des Glasbandes 10 ermöglicht wird. Hierdurch ist es auch möglich, mit einem Düsenschlitz 5 verschiedene Glasbänder mit einem breiteren Bereich unterschiedlicher Glasdicken zu ziehen, als der Bereich, für den der Düsenschlitz 5 eigentlich optimiert ist.

Auf diese Weise können beispielsweise bei dünneren Gläsern mit konkaver Dickenverteilung in der Mitte des Glasbandes 10 verschiedene Heiz- und/oder Kühleinheiten 50 eingesetzt werden, um die Glastemperatur zu erniedrigen, bzw. die Viskosität des Glases zu erhöhen. Dadurch wird die Formgebung früher beendet und das Glas wird in diesem Bereich nicht so dünn ausgezogen, wie es ohne diese Heiz- und/oder Kühleinheiten 50 der Fall gewesen wäre. Um die Temperatur individuell an gewünschten Positionen des Glasbandes 10 regulieren zu können, ist denkbar, dass mehrere Heiz- und/oder Kühleinheiten 50 entlang, beziehungsweise bezüglich der Breite des Glasbandes 10 nebeneinander und/oder diagonal, beziehungsweise quer angeordnet sein können. Ebenso ist es möglich, dass mehrere Heiz- und/oder Kühleinheiten 50, insbesondere in Ziehrichtung untereinander angeordnet sind. Je nach Anwendung kann es beispielsweise vorgesehen sein, dass zwischen zwei und sechs Heiz- und/oder Kühleinheiten 50 nebeneinander, untereinander und/oder diagonal zueinander angeordnet sind.

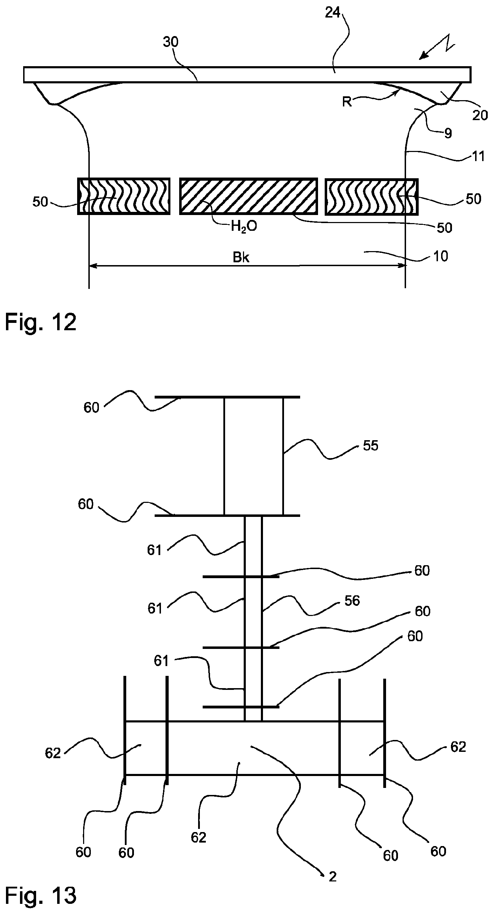

Vorteilhafterweise können die Heiz- und/oder Kühleinheiten 50 jeweils als Luft oder Wasserkühler ausgebildet sein und insbesondere einen Luftstrom, Wasserstrahl, Wassertröpfchen, Nebel und/oder ein Aerosol erzeugen, wie es beispielsweise in Fig. 12 schematisch dargestellt ist. Diese Medien können insbesondere lokal und gegebenenfalls direkt auf das Glasband 10 gerichtet werden.

Es ist aber auch möglich, dass die Heiz- und/oder Kühleinheiten 50 als indirekte Heiz- und/oder Kühleinheiten 50, beispielsweise als geschlossene Leitungssysteme ausgebildet sind, in welchen zumindest ein Medium zirkuliert, sodass das Glasband 10 insbesondere keinen Kontakt zu einem weiteren Medium, beispielsweise Wasser hat. In diesem Fall sind Heiz- und/oder Kühleinheiten 50 derart ausgebildet, dass sie jeweils Wärmeenergie abgeben oder aufnehmen, beziehungsweise abtransportieren können. Es ist denkbar, dass zumindest eine Leitung eines solchen Leitungssystems bezüglich der Ziehrichtung quer oder parallel ausgerichtet ist. Um die Temperatur, vorzugsweise des Mediums und/oder des Glasbandes zu erfassen, kann eine Temperaturmesseinrichtung 45 vorgesehen sein, welche insbesondere an zumindest einem, vorzugsweise an jeweils einer Heiz- und/oder Kühleinheiten 50 angeordnet ist, sodass beispielsweise auch die dem Glasband 10 entzogene Wärmeenergie messbar ist. Ohne Beschränkung auf die zuvor genannten Ausführungsformen kann auch eine Kombination aus direkten und indirekten Heiz- und/oder Kühleinheiten 50 zum Einsatz kommen. Unabhängig davon, ob die Heiz- und/oder Kühleinheiten 50 indirekt oder direkt kühlen, beziehungsweise heizen, sind verschiedene Formen der Querschnitte der Heiz- und/oder Kühleinheiten 50 denkbar, beispielsweise eine runde, ovale oder polygonale Form, wie ein Recht- oder Sechseck.

Dabei kann jeweils der Abstand einer Heiz- und/oder Kühleinheit 50 zum Glasband 10 verändert werden. Somit wird eine Feineinstellung beispielsweise einer Kühlung durch Luftkühlung mittels Einstellung der Luftmenge ermöglicht. Dabei wird das Glas dicker, je größer die durchgeführte Luftmenge pro Zeiteinheit ist. Eine weitere, sehr effektive Variante der Luftkühlung ist die Beimischung von zerstäubtem Wasser, sodass ein Aerosol gebildet wird. Dieses Aerosol kann je nach Wassermenge deutlich mehr Wärmeenergie transportieren, als reine trockene Luft, wobei das Aerosol, bzw. das zerstäubte Wasser, oder eine andere zerstäubte Flüssigkeit auch mit Luft oder einer speziellen Gaszusammensetzung zur effektiven Kühlung vermischt werden kann.

Bei Einsatz einer Heiz- und/oder Kühleinheit 50, etwa in Form eines Wasser- und/oder Luftkühlers kann diese in ihrer Position, bzw. in ihrem Abstand zum Glasband 10 verändert werden. Dabei wird das Glas dicker, je kleiner der Abstand des Wasserkühlers von dem Glasband 10 ist. Die gleiche Wirkung, nur in umgekehrter Richtung, haben Heizeinheiten, mit denen das Glasband 10 in gewünschten Bereichen dünner geformt werden kann. Dabei können die Heizeinheiten als Luft und/oder Heizwendel-basierte Heizeinheiten ausgebildet sein. Um die Heiz- und/oder Kühleinheiten 50 präzise einstellen zu können, kann eine Temperaturmesseinrichtung 45 vorgesehen sein, welche zwischen der Düse 4 und den Heiz- und/oder Kühleinheiten 50 angeordnet ist.

In einer weiteren Ausführungsform weist die Vorrichtung 1 einen Tiegel 55 zur Aufnahme und Homogenisierung von geläutertem Glas auf, an welchem vorzugsweise zumindest ein Auslaufrohr 56 mit speziell angepasstem Durchmesser, welches insbesondere im Ziehtank 2 mündet, angeordnet ist. So kann das Glas vom Tiegel 55 durch das Auslaufrohr 56 in den Ziehtank 2 befördert werden. Die Vorrichtung kann dabei über zumindest ein, vorzugsweise mehrere oder sogar eine Vielzahl von Heizelementen 60 aufweisen, wobei zumindest am Ziehtank 2, am Auslaufrohr 56 und/oder am Tiegel 55 zumindest ein Heizelement 60 angeordnet ist. Entsprechend des in Fig. 13 gezeigten Beispiels können auch jeweils am Ziehtank 2, am Auslaufrohr 56 und/oder am Tiegel 55 mehrere Heizelemente 60 angeordnet sein, um die Temperatur und die Verteilung des Glases im Ziehtank 2 präzise einstellen zu können.

Heizelemente 60 werden im Sinne der Erfindung als Apparaturen verstanden, welche dazu geeignet und vorgesehen sind, Energie an den Ziehtank 2, das Auslaufrohr 56 und/oder den Tiegel 55 und/oder deren Inhalt abzugeben. Diese Energie kann beispielsweise in Form von Wärmeenergie, oder auch elektrischer Energie oder beispielsweise magnetischer Energie abgegeben werden. Dabei können die Heizelemente 60 ein oder mehrere Heizwendeln und/oder Flansche aufweisen, welche den Ziehtank 2, das Auslaufrohr 56 und/oder den Tiegel 55 zumindest teilweise oder vollständig in zumindest eine Richtung umschließen können. Allgemein können der Ziehtank 2, das Auslaufrohr 56, der Tiegel 55 und/oder deren Inhalt daher direkt mittels von den Heizelementen 60 zugeführter Wärmeenergie beheizt werden, oder der Ziehtank 2, das Auslaufrohr 56 und/oder der Tiegel 55 beispielsweise durch Induktion oder eine Stromzufuhr, vorzugsweise durch zumindest einen oder mehrere insbesondere Flansche zur Selbsterwärmung gebracht werden. Hierbei ist es denkbar, dass ein Stromfluss durch den Ziehtank 2, das Auslaufrohr 56 und/oder den Tiegel 55 mittels zumindest zwei Flanschen generiert wird, oder durch zumindest einen Flansch ein magnetisches Feld generiert wird, welches den Ziehtank 2, das Auslaufrohr 56 und/oder den Tiegel 55 induktiv mit Energie versorgt. Vorteilhafterweise kann der Ziehtank 2, das Auslaufrohr 56 und/oder der Tiegel 55 daher ein wärme- und/oder stromleitendes Material aufweisen, beispielsweise ein Metall. Allgemein kann die Beheizung mittels der Heizelemente 60 insbesondere indirekt und vorzugsweise über eine größere Fläche erfolgen und somit beispielsweise die Glasfehlerbildung reduziert werden. Auch eine Feinjustage der Temperatur, insbesondere lokal ist möglich.

Ohne Beschränkung auf das Beispiel der Fig. 13 ist vorgesehen, dass am Tiegel 55 jeweils ein Heizelement 60 an der oberen Einlauföffnung und der unteren Auslauföffnung angeordnet ist, sodass das Glas mit gewünschter Temperatur in das Auslaufrohr 56 gelassen werden kann. Das Auslaufrohr 56 weist drei Heizelemente 60 auf, wobei jeweils ein Heizelement 60 im oberen Drittel, eines im mittigen Drittel und eines im unteren Drittel angeordnet ist.

Vorzugsweise ist das Auslaufrohr 56 auf diese Weise in zwei bis vier elektrische Heizkreise 61 aufgeteilt, insbesondere sodass eine sehr feine Temperatureinstellung möglich ist und das Glas schon beim Einlaufen in den Ziehtank gleichmäßig verteilt werden kann.

In einer weiteren Ausführungsform weist der Ziehtank 2 mehrere, insbesondere zumindest vier Heizelemente 60 auf, vorzugsweise sodass die Beheizung des Ziehtanks (2) in vorzugsweise drei elektrische Heizkreise aufgeteilt ist. Die Heizkreise können auch als insbesondere räumlich unterschiedlich angeordnete oder unterschiedliche beheizende Zonen des Ziehtanks 2 verstanden werden, welche bspw. jeweils definierte Volumenbereiche des Glases im Ziehtank beheizen können. Dabei sind die Heizkreise 62 des Ziehtanks 2 vorzugsweise bezüglich der Länge L des Düsenschlitzes 5 in Reihe angeordnet, um die Glasverteilung im Ziehtank 2 in Querrichtung, bzw. entlang der Länge L des Düsenschlitzes 5 zu beeinflussen. Somit kann die Glasverteilung am Düsenschlitz 5 und der Durchsatz der Glasmenge an der Düse 4 über die Temperaturführung des Auslaufrohres 56 und des Ziehtanks 2 eingestellt werden. Bevorzugt sind die Heizelemente 60 derart angeordnet, dass zumindest zwei oder drei, insbesondere mehrere Heizkreise 62 gebildet werden. Dabei können mindestens zwei der Heizkreise 62 und/oder der Heizelemente 60 seitlich des Ziehtanks 2 angeordnet sein, insbesondere so, dass zumindest drei Heizkreise 62 gebildet werden, von denen zumindest ein weiterer Heizkreis 62 mittig des Ziehtanks 2 angeordnet ist. Dabei kann jeder Heizkreis 62 von zumindest zwei Heizelementen 60 umgeben, bzw. begrenzt oder eingeschlossen sein.

Daher kann die Aufgabe auch allgemein, ohne Beschränkung auf spezielle Merkmale bestimmter Ausführungsformen durch eine Vorrichtung 1 zum Ziehen von Glasbändern 10 aus einer Glasschmelze 9 gelöst werden, wobei die Vorrichtung 1 einen Tiegel 55 zur Aufnahme einer Schmelze aus geläutertem Glas und ein Auslaufrohr 56 zur Förderung der Glasschmelze in einen Ziehtank 2 aufweist, wobei zumindest der Ziehtank 2 mehrere Heizelemente 60 aufweist, welche vorzugsweise quer bezüglich einer Länge L eines Düsenschlitzes 5 einer Düse 4, durch welche die Glasschmelze 9 nach unten austreten kann, angeordnet sind, wobei die Vorrichtung 1 zumindest eine, insbesondere mehrere Kühl- und/oder Heizeinheiten 50 aufweist, welche im Formgebungsbereich 14 angeordnet sind. Vorzugsweise ist auch bei dieser Ausführungsform der Düsenschlitz 5 in einem ersten 8a und einem zweiten 8b Seitenbereich zu den Enden 7a, 7b des Düsenschlitzes 5 hin, insbesondere durchgehend oder kontinuierlich, in Ziehrichtung Z nach unten gekrümmt, so dass die Enden 7a, 7b tiefer liegen, als ein zwischen den Enden 7a, 7b angeordneter mittlerer Bereich 8c des Düsenschlitzes 5. Zur Homogenisierung des Glases, kann im Tiegel 55 eine Rühreinheit vorgesehen sein, insbesondere deren Umdrehungszahl pro Zeiteinheit einstellbar ist.

Bezugszeichenliste

| | |
|---|---|
| 1 | Vorrichtung zum Ziehen von Glasbändern |
| 2 | Ziehtank |
| 3 | Kühleinrichtung |
| 4 | Düse |
| 5 | Düsenschlitz |
| 6 | Wandungen der Düse bzw. des Düsenschlitzes |
| 7a | Erstes Ende |
| 7b | Zweites Ende |
| 8a | Erster Seitenbereich des Düsenschlitzes |
| 8b | Zweiter Seitenbereich des Düsenschlitzes |
| 8c | Mittlerer Bereich des Düsenschlitzes |
| 9 | Glasschmelze |
| 10 | Glasband |
| 11 | Borten |
| 14 | Formgebungsbereich |
| 15 | Ziehrollen |
| 20 | Vorsprung |
| 21 | Untere Wandung des Vorsprungs |
| 22 | Endwandung des Vorsprungs |
| 23 | Unteres Ende des Vorsprungs |
| 24 | Obere Wandung der Düse |
| 25 | Seitliche Wandungen |
| 30 | Untere Begrenzung des mittleren Bereichs |
| 40 | Kühlofen |
| 41 | Kühl- und/oder Heizabschnitte |

| | |
|---|---|
| 42 | Thermoelement |
| 45 | Temperaturmesseinrichtung |
| 50 | Kühl und/oder Heizeinheiten |
| 55 | Tiegel |
| 56 | Auslaufrohr |
| 60 | Heizelemente |
| 61 | Heizkreis des Auslaufrohrs |
| 62 | Heizkreis des Ziehtanks |
| B | Breite |
| Bk | Breite eines mit einem gekrümmten Düsenschlitz erzeugten Glasbandes |
| Bp | Breite eines mit einem parallelen Düsenschlitz erzeugten Glasbandes |
| Bs | Breite des Düsenschlitzes |
| Bv | Breite des Vorsprungs |
| H | Höhe der Düse / Höhe des Vorsprungs |
| L | Länge des Düsenschlitzes |
| Lv | Länge des Vorsprungs |
| R | Radius der Krümmung |
| W | Wendepunkt der Krümmung |
| Z | Ziehrichtung |

**Patentansprüche**

1. Vorrichtung (1) zum Ziehen von Glasbändern (10) aus einer Glasschmelze (9), wobei die Vorrichtung (1) einen Ziehtank (2) zur Aufnahme einer Glasschmelze (9) aufweist, welcher eine Düse (4) mit einer Durchlassöffnung (5) aufweist, durch welche die Glasschmelze (9) nach unten austreten kann, wobei die Durchlassöffnung als Düsenschlitz (5) mit zwei Enden (7a, 7b) ausgebildet ist, wobei die Länge (L) des Düsenschlitzes (5) größer ist, als dessen Breite (B), wobei der Düsenschlitz (5) in einem ersten (8a) und einem zweiten (8b) Seitenbereich zu den Enden (7a, 7b) des Düsenschlitzes (5) hin, insbesondere durchgehend oder kontinuierlich, in Ziehrichtung (Z) nach unten gekrümmt ist, so dass die Enden (7a, 7b) tiefer liegen, als ein zwischen den Enden (7a, 7b) angeordneter mittlerer Bereich (8c) des Düsenschlitzes (5), und wobei sich die Breite des Düsenschlitzes (5) von der Mitte zu den Enden (7a, 7b) hin ändert, und wobei der Düsenschlitz (5) im ersten (8a) und zweiten (8b) Seitenbereich bezüglich der Höhe (H) eine kontinuierliche Krümmung mit einem Radius (R) aufweist, wobei die Höhe (H) parallel zur Ziehrichtung (Z) verläuft.

2. Vorrichtung (1) nach Anspruch 1, **dadurch gekennzeichnet, dass** sich der Düsenschlitz (5) von der Mitte zu den Enden hin verjüngt, so dass die Breite des Düsenschlitzes (5) im mittleren Bereich (8c) größer ist, als an dessen Enden (7a, 7b).

3. Vorrichtung (1) nach einem der vorhergehenden Ansprüche, **dadurch gekennzeichnet, dass**
   der Düsenschlitz zumindest eines der folgenden Merkmale aufweist:

   - der Düsenschlitz (5) ist bis zum Ende (7a, 7b) stetig gekrümmt,
   - der Düsenschlitz (5) ist bis in das Ende (7a, 7b) hinein gekrümmt und die Krümmung weist einen Wendepunkt (W) auf.

4. Vorrichtung (1) nach einem der vorhergehenden Ansprüche, **dadurch gekennzeichnet, dass**
   der Düsenschlitz (5) in Aufsicht, also bezüglich der Länge (L) und Breite (B) eine ovale, elliptische, konkave oder linsenförmige Form aufweist.

5. Vorrichtung (1) nach einem der vorhergehenden Ansprüche, **dadurch gekennzeichnet, dass**
   die Düse (4) im ersten (8a) und zweiten (8b) Seitenbereich jeweils einen Vorsprung (20) zur Aufnahme eines Zusatzdurchlaufvolumens der Glasschmelze (9) aufweist und sich der Vorsprung (20) entlang der Ziehrichtung (Z) erstreckt, wobei ein Innenraum des Vorsprungs (20) die Größe des Zusatzdurchlaufvolumens definiert.

6. Vorrichtung (1) nach Anspruch 5, **dadurch gekennzeichnet, dass**
   das Verhältnis der Höhe (H) eines Innenraums des Vorsprungs (20) zur Breite (B) des Innenraums des Vorsprungs (20) größer ist, als 0,2, bevorzugt größer als 0,5, bevorzugt größer als 0,8 und/oder kleiner als 2, bevorzugt kleiner als 1,6, bevorzugt kleiner als 1,2.

7. Vorrichtung (1) nach Anspruch 6, **dadurch gekennzeichnet, dass**

   - der Radius (R) der Krümmung des Düsenschlitzes (5) durch die Höhe (H) des Vorsprungs (20) und eine Länge (L) des Vorsprungs (20) definiert ist.
   und/oder
   - das Verhältnis der Länge (L) des Vorsprungs (20) zu der Höhe (H) des Vorsprungs (20) kleiner ist, als 2,8 bevorzugt kleiner als 2,6, bevorzugt kleiner als 2,4.
   und/oder
   - der gekrümmte Abschnitt des Vorsprungs (20) des ersten (8a) Seitenbereichs dem gekrümmten Abschnitt des Vorsprungs (20) des zweiten (8b) Seitenbereichs gegenüberliegt.

8. Vorrichtung (1) nach einem der Ansprüche 6 bis 7, **dadurch gekennzeichnet, dass**

   - die Höhe (Hv) des Innenraums des Vorsprungs (20) größer ist, als 10 mm, bevorzugt größer als 15 mm, bevorzugt größer als 20 mm und/oder kleiner als 80 mm, bevorzugt kleiner als 60 mm, bevorzugt kleiner als 40 mm.
   und/oder
   - die Breite (B) des Vorsprungs (20) definiert ist als das Produkt aus der Breite (B) des Düsenschlitzes (5), insbesondere des Querschnitts der Durchlassöffnung und einem Wert, der größer ist, als 1 mm, bevorzugt größer als 1,5 mm, bevorzugt größer als 2 mm und/oder kleiner als 15 mm, bevorzugt kleiner als 10 mm, bevorzugt kleiner als 5 mm.

9. Vorrichtung (1) nach einem der Ansprüche 6 bis 8, **dadurch gekennzeichnet, dass** der Radius (R) der Krümmung des Düsenschlitzes (5) größer ist, als 100 mm, bevorzugt größer als 130 mm, bevorzugt größer als 160 mm und/oder kleiner als 260 mm, bevorzugt kleiner als 230 mm, bevorzugt kleiner als 200 mm.

10. Vorrichtung (1) nach einem der Ansprüche 5 bis 9, **dadurch gekennzeichnet, dass** der Vorsprung (20) eine untere Wandung (21) aufweist, welche den Innenraum des Vorsprungs (20) in Ziehrichtung (Z) abschließt, wobei die Durchlassöffnung in der unteren Wandung (21) angeordnet ist.

11. Vorrichtung (1) nach einem der vorhergehenden Ansprüche, **dadurch gekennzeichnet, dass**

    - am Ziehtank (2) mehrere Heizelemente (60) angeordnet sind, so dass die Beheizung des Ziehtanks (2) in elektrische Heizkreise (62) aufgeteilt ist, wobei die Heizkreise (62) des Ziehtanks (2) vorzugsweise bezüglich der Länge L des Düsenschlitzes 5 in Reihe angeordnet sind.
    und/oder
    - die Vorrichtung (1) zumindest eine, insbesondere mehrere räumlich verteilt angeordnete Kühl- und/oder Heizeinheiten (50) aufweist, welche im Formgebungsbereich (14) angeordnet sind.

12. Verfahren zum Ziehen von Dünnglasbändern (10) aus einer Glasschmelze (9), bei welchem Glas geschmolzen wird und aus einem die Glasschmelze (9) führenden

    Ziehtank (2) mit einer Durchlassöffnung austritt und in eine Ziehrichtung (Z) weg nach unten zum Dünnglasband (10) ausgezogen wird, wobei das Dünnglasband (10) nach dem Austritt aus der Durchlassöffnung abgekühlt wird, bis es die Glasübergangstemperatur $T_g$ unterschreitet und das Dünnglasband (10) durch einen Kontakt mit Ziehrollen (15), welche Zugkräfte auf das Dünnglasband (10) übertragen, in Ziehrichtung (Z) ausgezogen wird, wobei die Ziehrollen (15) das Glas bei einer Temperatur des Glases unterhalb der Glasübergangstemperatur $T_g$, kontaktieren,
    wobei eine Vorrichtung (1) nach einem der vorhergehenden Ansprüche verwendet wird und die Vorrichtung (1) eine Düse (4) mit Vorsprüngen (20) aufweist, welche der Einschnürung des Glasbandes (10) entgegenwirken.

13. Verfahren nach dem vorhergehenden Anspruch, **dadurch gekennzeichnet, dass** die Düse so ausgebildet ist, dass eine unterhalb der Durchlassöffnung erzeugte Zugkraft des Glasbandes (10) am Vorsprung (20) in eine vertikale (Kv) und eine horizontale (Kh) Kraftkomponente aufgeteilt wird, wobei eine demgegenüber wirkende Umformkraft (Uz) im Glasband (10) erzeugt wird und der Anteil einer horizontalen Umformkraftkomponente (Uh) gegenüber dem Anteil einer vertikalen Umformkraftkomponente (Uv) zum ersten (7a) und zweiten Ende (7b) ansteigt.

14. Verfahren nach einem der vorhergehenden Ansprüche, **gekennzeichnet durch** zumindest eines der folgenden Merkmale:

- es wird ein Dünnglasband (10) mit einer Dicke von höchstens 70 μm, vorzugsweise höchstens 50 μm, bevorzugt höchstens 20 μm gezogen,
- es werden nacheinander Glasbänder aus der gleichen Düse ausgezogen, deren Dicke sich um mindestens einen Faktor 1,5, vorzugsweise mindestens um einen Faktor 2 unterscheidet.

**Claims**

1. Device (1) for drawing glass strips (10) from a glass melt (9), wherein the device (1) has a drawing tank (2) for holding a glass melt (9), which has a nozzle (4) with a passage opening (5), through which the glass melt (9) can emerge downwards, wherein the passage opening is designed as a nozzle slot (5) having two ends (7a, 7b), wherein the length (L) of the nozzle slot (5) is greater than the width (B) thereof, wherein the nozzle slot (5) is curved downwards towards the ends (7a, 7b) of the nozzle slot (5) in the drawing direction (Z), in particular throughout or continuously, in a first (8a) and a second (8b) side region, with the result that the ends (7a, 7b) are lower than a central region (8c) of the nozzle slot (5) arranged between the ends (7a, 7b), and wherein the width of the nozzle slot (5) changes from the centre towards the ends (7a, 7b), and wherein the nozzle slot (5) has a continuous curvature with respect to the height (H), with a radius (R), in the first (8a) and second (8b) side regions, wherein the height (H) runs parallel to the drawing direction (Z).

2. Device (1) according to Claim 1, **characterized in that** the nozzle slot (5) tapers from the centre towards the ends, and therefore the width of the nozzle slot (5) is greater in the central region (8c) than at the ends (7a, 7b) thereof.

3. Device (1) according to either of the preceding claims, **characterized in that** the nozzle slot has at least one of the following features:

   - the nozzle slot (5) has a steady curvature up to the end (7a, 7b),
   - the nozzle slot (5) is curved as far as the end (7a, 7b) and the curvature has an inflection point (W).

4. Device (1) according to any one of the preceding claims, **characterized in that** the nozzle slot (5) has an oval, elliptical, concave or lenticular shape in plan view, that is to say with respect to the length (L) and width (B).

5. Device (1) according to any one of the preceding claims, **characterized in that** in each of the first (8a) and second (8b) side regions, the nozzle (4) has a projection (20) for holding an additional through-flow volume of the glass melt (9), and the projection (20) extends along the drawing direction (Z), wherein an interior space of the projection (20) defines the magnitude of the additional through-flow volume.

6. Device (1) according to Claim 5, **characterized in that** the ratio of the height (H) of an interior space of the projection (20) to the width (B) of the interior space of the projection (20) is greater than 0.2, preferably greater than 0.5, preferably greater than 0.8 and/or less than 2, preferably less than 1.6, preferably less than 1.2.

7. Device (1) according to Claim 6, **characterized in that**

   - the radius (R) of curvature of the nozzle slot (5) is defined by the height (H) of the projection (20) and a length (L) of the projection (20),
   and/or
   - the ratio of the length (L) of the projection (20) to the height (H) of the projection (20) is less than 2.8, preferably less than 2.6, preferably less than 2.4, and/or
   - the curved portion of the projection (20) of the first (8a) side region is situated opposite the curved portion of the projection (20) of the second (8b) side region.

8. Device (1) according to either of Claims 6 and 7, **characterized in that**

   - the height (Hv) of the interior space of the projection (20) is greater than 10 mm, preferably greater than 15 mm, preferably greater than 20 mm and/or less than 80 mm, preferably less than 60 mm, preferably less than 40 mm, and/or
- the width (B) of the projection (20) is defined as the product of the width (B) of the nozzle slot (5), in particular the cross section of the passage opening and a value which is greater than 1 mm, preferably greater than 1.5 mm, preferably greater than 2 mm and/or less than 15 mm, preferably less than 10 mm, preferably less than 5 mm.

9. Device (1) according to any one of Claims 6 to 8, **characterized in that** the radius (R) of curvature of the nozzle slot (5) is greater than 100 mm, preferably greater than 130 mm, preferably greater than 160 mm and/or less than 260 mm, preferably less than 230 mm, preferably less than 200 mm.

10. Device (1) according to any one of Claims 5 to 9, **characterized in that**
the projection (20) has a lower wall (21) which closes off the interior space of the projection (20) in the drawing direction (Z), wherein the passage opening is arranged in the lower wall (21).

11. Device (1) according to any one of the preceding claims, **characterized in that**

- a plurality of heating elements (60) is arranged on the drawing tank (2), and therefore the heating of the drawing tank (2) is divided into electrical heating circuits (62), wherein the heating circuits (62) of the drawing tank (2) are preferably arranged in series with respect to the length (L) of the nozzle slot (5), and/or
- the device (1) has at least one cooling and/or heating unit, in particular a plurality of spatially distributed cooling and/or heating units (50), which are arranged in the shaping region (14).

12. Method for drawing thin glass strips (10) from a glass melt (9), in which glass is melted and emerges from a drawing tank (2), which guides the glass melt (9) and has a passage opening, and is drawn out downwards in a drawing direction (Z) to form the thin glass strip (10), wherein the thin glass strip (10) is cooled after emerging from the passage opening until it falls below the glass transition temperature $T_g$, and the thin glass strip (10) is drawn out in the drawing direction (Z) by contact with drawing rollers (15) which transmit tensile forces to the thin glass strip (10), wherein the drawing rollers (15) contact the glass at a temperature of the glass below the glass transition temperature $T_g$, wherein a device (1) according to any one of the preceding claims is used and the device (1) has a nozzle (4) with projections (20) which counteract the constriction of the glass strip (10).

13. Method according to the preceding claim, **characterized in that** the nozzle is designed in such a way that a tensile force on the glass strip (10) generated below the passage opening is divided at the projection (20) into a vertical (Kv) and a horizontal (Kh) force component, wherein a deformation force (Uz) acting oppositely thereto is generated in the glass strip (10) and the proportion of a horizontal deformation force component (Uh) relative to the proportion of a vertical deformation force component (Uv) increases towards the first (7a) and the second end (7b).

14. Method according to any one of the preceding claims, **characterized by** at least one of the following features:

- a thin glass strip (10) with a thickness of not more than 70 $\mu$m, preferably not more than 50 $\mu$m, preferably not more than 20 $\mu$m, is drawn,
- glass strips of which the thickness differs by a factor of at least 1.5, preferably by a factor of at least 2, are successively drawn from the same nozzle.

## Revendications

1. Dispositif (1) pour étirer des bandes de verre (10) à partir d'une masse fondue de verre (9), le dispositif (1) présentant un réservoir d'étirage (2) pour recevoir une masse fondue de verre (9), lequel présente une buse (4) avec une ouverture de passage (5) à travers laquelle la masse fondue de verre (9) peut sortir vers le bas, l'ouverture de passage étant réalisée sous forme de fente de buse (5) avec deux extrémités (7a, 7b), la longueur (L) de la fente de buse (5) étant supérieure à sa largeur (B), la fente de buse (5) étant incurvée vers le bas dans la direction d'étirage (Z) dans une première (8a) et une deuxième (8b) zone latérale par rapport aux extrémités (7a, 7b) de la fente de buse (5), notamment de manière continue ou ininterrompue, de telle sorte que les extrémités (7a, 7b) se situent plus bas qu'une zone centrale (8c) de la fente de buse (5) agencée entre les extrémités (7a, 7b), et la largeur de la fente de buse (5) variant du centre vers les extrémités (7a, 7b), et la fente de buse (5) présentant dans la première (8a) et la deuxième (8b) zone latérale, par rapport à la hauteur (H), une courbure continue avec un rayon (R), la hauteur (H) s'étendant parallèlement à la direction d'étirage (Z).

**2.** Dispositif (1) selon la revendication 1, **caractérisé en ce que**
la fente de buse (5) se rétrécit du centre vers les extrémités, de telle sorte que la largeur de la fente de buse (5) est plus grande dans la zone centrale (8c) qu'à ses extrémités (7a, 7b).

**3.** Dispositif (1) selon l'une quelconque des revendications précédentes, **caractérisé en ce que**
la fente de la buse présente au moins l'une des caractéristiques suivantes :

- la fente de buse (5) est courbée de manière continue jusqu'à l'extrémité (7a, 7b),
- la fente de buse (5) est courbée jusqu'à l'extrémité (7a, 7b) et la courbure présente un point d'inflexion (W).

**4.** Dispositif (1) selon l'une quelconque des revendications précédentes, **caractérisé en ce que**
la fente de buse (5) présente, en vue de dessus, c'est-à-dire par rapport à la longueur (L) et à la largeur (B), une forme ovale, elliptique, concave ou lenticulaire.

**5.** Dispositif (1) selon l'une quelconque des revendications précédentes, **caractérisé en ce que**
la buse (4) présente dans la première (8a) et la deuxième (8b) zone latérale respectivement une saillie (20) pour recevoir un volume de passage supplémentaire de la masse fondue de verre (9) et la saillie (20) s'étend le long de la direction d'étirage (Z), un espace intérieur de la saillie (20) définissant la taille du volume de passage supplémentaire.

**6.** Dispositif (1) selon la revendication 5, **caractérisé en ce que**
le rapport entre la hauteur (H) d'un espace intérieur de la saillie (20) et la largeur (B) de l'espace intérieur de la saillie (20) est supérieur à 0,2, de préférence supérieur à 0,5, de préférence supérieur à 0,8 et/ou inférieur à 2, de préférence inférieur à 1,6, de préférence inférieur à 1,2.

**7.** Dispositif (1) selon la revendication 6, **caractérisé en ce que**

- le rayon (R) de la courbure de la fente de buse (5) est défini par la hauteur (H) de la saillie (20) et une longueur (L) de la saillie (20),
et/ou
- le rapport entre la longueur (L) de la saillie (20) et la hauteur (H) de la saillie (20) est inférieur à 2,8, de préférence inférieur à 2,6, de préférence inférieur à 2, 4,
et/ou
- la section incurvée de la saillie (20) de la première zone latérale (8a) est opposée à la section incurvée de la saillie (20) de la deuxième zone latérale (8b).

**8.** Dispositif (1) selon l'une quelconque des revendications 6 à 7, **caractérisé en ce que**

- la hauteur (Hv) de l'espace intérieur de la saillie (20) est supérieure à 10 mm, de préférence supérieure à 15 mm, de préférence supérieure à 20 mm et/ou inférieure à 80 mm, de préférence inférieure à 60 mm, de préférence inférieure à 40 mm,
et/ou
- la largeur (B) de la saillie (20) est définie comme le produit de la largeur (B) de la fente de buse (5), notamment de la section transversale de l'ouverture de passage, et d'une valeur qui est supérieure à 1 mm, de préférence supérieure à 1,5 mm, de préférence supérieure à 2 mm et/ou inférieure à 15 mm, de préférence inférieure à 10 mm, de préférence inférieure à 5 mm.

**9.** Dispositif (1) selon l'une quelconque des revendications 6 à 8, **caractérisé en ce que** le rayon (R) de courbure de la fente de buse (5) est supérieur à 100 mm, de préférence supérieur à 130 mm, de préférence supérieur à 160 mm et/ou inférieur à 260 mm, de préférence inférieur à 230 mm, de préférence inférieur à 200 mm.

**10.** Dispositif (1) selon l'une quelconque des revendications 5 à 9, **caractérisé en ce que**
la saillie (20) présente une paroi inférieure (21) qui ferme l'espace intérieur de la saillie (20) dans la direction d'étirage (Z), l'ouverture de passage étant agencée dans la paroi inférieure (21).

**11.** Dispositif (1) selon l'une quelconque des revendications précédentes, **caractérisé en ce que**

- plusieurs éléments chauffants (60) sont agencés sur le réservoir d'étirage (2), de telle sorte que le chauffage du réservoir d'étirage (2) est réparti en circuits de chauffage électriques (62), les circuits de chauffage (62) du réservoir d'étirage (2) étant de préférence agencés en série par rapport à la longueur L de la fente de buse 5, et/ou
- le dispositif (1) présente au moins une, notamment plusieurs unités de refroidissement et/ou de chauffage (50) agencées de manière répartie dans l'espace, qui sont agencées dans la zone de façonnage (14).

12. Procédé d'étirage de bandes de verre mince (10) à partir d'une masse fondue de verre (9), dans lequel du verre est fondu et sort d'un réservoir d'étirage (2) guidant la masse fondue de verre (9) avec une ouverture de passage et est étiré dans une direction d'étirage (Z) en s'éloignant vers le bas en la bande de verre mince (10), la bande de verre mince (10) étant refroidie après la sortie de l'ouverture de passage, jusqu'à ce qu'elle passe en dessous de la température de transition vitreuse $T_g$ et la bande de verre mince (10) est étirée dans la direction d'étirage (Z) par un contact avec des rouleaux d'étirage (15) qui transmettent des forces de traction à la bande de verre mince (10), les rouleaux d'étirage (15) étant en contact avec le verre à une température du verre inférieure à la température de transition vitreuse $T_g$, un dispositif (1) selon l'une quelconque des revendications précédentes étant utilisé et le dispositif (1) présentant une buse (4) avec des saillies (20) qui s'opposent au rétrécissement de la bande de verre (10).

13. Procédé selon la revendication précédente, **caractérisé en ce que** la buse est réalisée de telle sorte qu'une force de traction de la bande de verre (10) générée en dessous de l'ouverture de passage est divisée au niveau de la saillie (20) en une composante de force verticale (Kv) et une composante de force horizontale (Kh), une force de déformation (Uz) agissant en opposition étant générée dans la bande de verre (10) et la part d'une composante de force de déformation horizontale (Uh) augmentant par rapport à la part d'une composante de force de déformation verticale (Uv) vers la première (7a) et la deuxième extrémité (7b).

14. Procédé selon l'une quelconque des revendications précédentes, **caractérisé par** au moins l'une des caractéristiques suivantes :

- une bande de verre mince (10) d'une épaisseur d'au plus 70 $\mu$m, préférentiellement d'au plus 50 $\mu$m, de préférence d'au plus 20 $\mu$m, est étirée,
- des bandes de verre dont l'épaisseur diffère d'au moins un facteur 1,5, de préférence d'au moins un facteur 2, sont étirées successivement à partir de la même buse.

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

**IN DER BESCHREIBUNG AUFGEFÜHRTE DOKUMENTE**

**In der Beschreibung aufgeführte Patentdokumente**

- US 1626382 A
- CN 110590132 A
- US 3473911 A
- US 2422466 A
- DE 1040196 B